(19) Europäisches Patentamt
European Patent Office
Office européen des brevets

(11) EP 4 519 328 B1

(12) # EUROPEAN PATENT SPECIFICATION

(45) Date of publication and mention of the grant of the patent:
**04.03.2026 Bulletin 2026/10**

(21) Application number: **22857119.6**

(22) Date of filing: **29.12.2022**

(51) International Patent Classification (IPC):
***C08F 8/00*** *(2006.01)* ***C08F 8/32*** *(2006.01)*
***C08F 8/42*** *(2006.01)* ***C08F 230/08*** *(2006.01)*
***C08F 210/06*** *(2006.01)* ***C08F 210/02*** *(2006.01)*

(52) Cooperative Patent Classification (CPC):
(C-Sets available)
**C08F 8/00; C08F 8/32; C08F 210/02; C08F 210/06;**
C08F 4/65908; C08F 4/65912; C08F 8/42;
C08F 2420/02; C08F 2810/50 (Cont.)

(86) International application number:
**PCT/US2022/082515**

(87) International publication number:
**WO 2023/234980 (07.12.2023 Gazette 2023/49)**

(54) **PROCESS FOR MELT FUNCTIONALIZATION OF SILICON HYDRIDE CONTAINING POLYOLEFIN AND PRODUCT**

VERFAHREN ZUR SCHMELZFUNKTIONALISIERUNG VON SILIKONHYDRID ENTHALTENDEM POLYOLEFIN UND PRODUKT

PROCÉDÉ DE FONCTIONNALISATION PAR FUSION D'HYDRURE DE SILICIUM CONTENANT UNE POLYOLÉFINE ET PRODUIT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **31.05.2022 US 202263347223 P**

(43) Date of publication of application:
**12.03.2025 Bulletin 2025/11**

(73) Proprietor: **Dow Global Technologies LLC**
**Midland, MI 48674 (US)**

(72) Inventors:
- **WALLER, Peter J.**
  **Midland, Michigan 48674 (US)**
- **KEAN, Zachary S.**
  **Midland, Michigan 48674 (US)**
- **LAITAR, David S.**
  **Midland, Michigan 48674 (US)**
- **DEVORE, David D.**
  **Midland, Michigan 48674 (US)**
- **LI PI SHAN, Colin**
  **Lake Jackson, Texas 77566 (US)**
- **NEILSON, Bethany M.**
  **Lake Jackson, Texas 77566 (US)**
- **RAO, Yuanqiao**
  **Collegeville, Pennsylvania 19426 (US)**

(74) Representative: **Boult Wade Tennant LLP**
**Salisbury Square House**
**8 Salisbury Square**
**London EC4Y 8AP (GB)**

(56) References cited:
**WO-A1-2009/056407 WO-A1-2013/156317**
**WO-A1-2021/262774 WO-A1-2021/262775**
**WO-A1-2021/262777 CN-A- 105 175 595**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 8/00, C08F 230/085;**
**C08F 8/32, C08F 230/085;**
**C08F 210/02, C08F 4/64193;**
**C08F 210/02, C08F 4/6592;**
**C08F 210/06, C08F 4/64144;**
C08F 8/42, C08F 230/085;
C08F 210/02, C08F 210/14, C08F 230/085, C08F 2500/02, C08F 2500/03, C08F 2500/08, C08F 2500/12, C08F 2500/27, C08F 2500/34;
C08F 210/02, C08F 210/14, C08F 230/085, C08F 2500/02, C08F 2500/03, C08F 2500/08, C08F 2500/27, C08F 2500/34;
C08F 210/02, C08F 210/14, C08F 230/085, C08F 2500/02, C08F 2500/03, C08F 2500/27, C08F 2500/34;
C08F 210/02, C08F 210/14, C08F 230/085, C08F 2500/03, C08F 2500/27, C08F 2500/34;
C08F 210/06, C08F 210/02, C08F 230/085, C08F 2500/03, C08F 2500/27, C08F 2500/34

## Description

BACKGROUND

Polyolefins have many advantages, in terms of cost, mechanical robustness, chemical resistance, and compositional range. However, polyolefins have limitations in terms of what functionalities they may contain. Functionalization of ethylene-based polymer (polyethylene), for example, is generally incompatible with solution phase polyethylene synthesis. Radical high pressure processes can generate polyethylene with polar functionality, but the process is capital intensive and compositional range is limited.

The art therefore recognizes the need for processes that can incorporate new functionalities into polyolefins, and polyethylene in particular.
WO2021/262774 discloses olefin/Si-H-monomer copolymers that are modified in solution by hydrosilylation.

SUMMARY

The present disclosure provides a process. In an embodiment, the process includes melt blending, in the presence of a platinum-group metal catalyst, (i) an olefin-SiH polymer with (ii) a monovinyl graft component having the Structure (1) $H_2C{=}CH_2\text{-}X$, wherein X of Structure (1) is a $C_4$-$C_{20}$ heterohydrocarbyl group with one or more heteroatoms selected from the group consisting of O, N, and Si. The process includes grafting the monovinyl graft component to the olefin-SiH polymer to form a functionalized olefin-Si polymer.

The present disclosure provides a composition. In an embodiment, the composition includes a functionalized olefin-Si polymer having a Structure (2)

Structure (2)

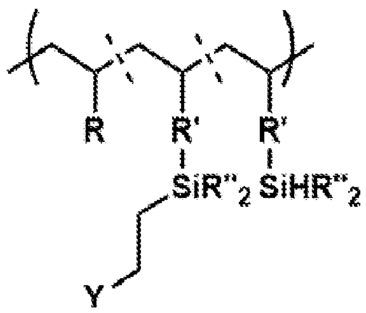

wherein

R is selected from the group consisting of a hexyl group, a methyl group, a hydrogen atom, and combinations thereof,
R' is selected from the group consisting of $-CH_2-$ and $-(CH_2)_4-$,
R" is $CH_3$, and
Y is a heterohydrocarbonyl group with a moiety selected from the group consisting of epoxide, ether, ester, alcohol, alkyl chain, amine, anhydride, ketone, phenol, and combinations thereof.

The functionalized olefin-Si polymer has a gel content from 0% to less than 3%, as measured in accordance with ASTM D2765-16.

DEFINITIONS

Any reference to the Periodic Table of Elements is that as published by CRC Press, Inc., 1990-1991. Reference to a group of elements in this table is by the new notation for numbering groups.

The numerical ranges disclosed herein include all values from, and including, the lower and upper value. For ranges containing explicit values (e.g., 1 or 2, or 3 to 5, or 6, or 7), any subrange between any two explicit values is included (e.g., the range 1-7 above includes subranges of 1 to 2; 2 to 6; 5 to 7; 3 to 7; 5 to 6; etc.).

Unless stated to the contrary, implicit from the context, or customary in the art, all parts and percents are based on weight, and all test methods are current as of the filing date of this disclosure.

The term "composition" refers to a mixture of materials which comprise the composition, as well as reaction products and decomposition products formed from the materials of the composition.

The terms "comprising," "including," "having" and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term "consisting essentially of" excludes from the scope of any succeeding recitation any other component, step, or procedure, excepting those that are not essential to operability. The term "consisting of" excludes any component, step, or procedure not specifically delineated or listed. The term "or," unless stated otherwise, refers to the listed members individually as well as in any combination. Use of the singular includes use of the plural and vice versa.

A "Dalton" is the unit for the molecular weight of a polymer and is equivalent to an atomic mass unit, with abbreviation "Da," or "kDa" (kilo Dalton).

An "ethylene-based polymer" or "ethylene polymer" is a polymer that contains a majority amount of polymerized ethylene based on the weight of the polymer and, optionally, may comprise at least one comonomer. Ethylene-based polymers typically comprise at least 50 mole percent (mol%) units derived from ethylene (based on the total amount of polymerizable monomers).

A "hydrocarbon" (or, "hydrocarbyl" a "hydrocarbyl group") is a compound containing only hydrogen atoms and carbon atoms.

The terms "heterohydrocarbon," ("heterohydrocarbyl," or heterohydrocarbyl group") and similar terms, as used herein, refer to a respective hydrocarbon, in which at least one carbon atom is substituted with a heteroatom group (for example, Si, O, N or P).

The terms "substituted hydrocarbon," (or "substituted hydrocarbyl," or ""substituted hydrocarbyl group") refers to a hydrocarbon in which one or more hydrogen atoms is/are independently substituted with a heteroatom group. The terms "substituted heterohydrocarbon," ("substituted heterohydrocarbyl," or "substituted heterohydrocarbyl group") and similar terms, as used herein, refer to a respective heterohydrocarbon in which one or more hydrogen atoms is/are independently substituted with a heteroatom group.

An "interpolymer" is a polymer prepared by the polymerization of at least two different types of monomers. The generic term interpolymer thus includes copolymers (employed to refer to polymers prepared from two different types of monomers), and polymers prepared from more than two different types of monomers.

An "olefin-based polymer" or "polyolefin" is a polymer that contains a majority mole percent polymerized olefin monomer (based on total amount of polymerizable monomers), and optionally, may contain at least one comonomer. Nonlimiting examples of olefin-based polymer include ethylene-based polymer and propylene-based polymer. Representative polyolefins include polyethylene, polypropylene, polybutene, polyisoprene and their various interpolymers.

A "polymer" is a polymeric compound prepared by polymerizing monomers, whether of the same or a different type. The generic term polymer thus embraces the term "homopolymer" (employed to refer to polymers prepared from only one type of monomer, with the understanding that trace amounts of impurities can be incorporated into the polymer structure), and the term "interpolymer," as defined hereinafter. Trace amounts of impurities, for example, catalyst residues, may be incorporated into and/or within the polymer. It also embraces all forms of copolymer, e.g., random, block, etc. The terms "ethylene/$\alpha$-olefin polymer" and "propylene/$\alpha$-olefin polymer" are indicative of copolymer as described above prepared from polymerizing ethylene or propylene respectively and one or more additional, polymerizable $\alpha$-olefin monomer. It is noted that although a polymer is often referred to as being "made of" one or more specified monomers, "based on" a specified monomer or monomer type, "containing" a specified monomer content, or the like, in this context the term "monomer" is understood to be referring to the polymerized remnant of the specified monomer and not to the unpolymerized species. In general, polymers herein are referred to as being based on "units" that are the polymerized form of a corresponding monomer.

A "propylene-based polymer" is a polymer that contains a majority amount of polymerized propylene based on the weight of the polymer and, optionally, may comprise at least one comonomer. Propylene-based polymers typically comprise at least 50 mole percent (mol%) units derived from propylene (based on the total amount of polymerizable monomers).

TEST METHODS

Density. ASTM D4703 was used to make a polymer plaque for density analysis. ASTM D792, Method B, was used to measure the density of each polymer (g/cc or g/cm$^3$).

Differential Scanning Calorimetry (DSC). Differential Scanning Calorimetry (DSC) is used to measure $T_m$, $T_c$, $T_g$ and crystallinity in ethylene-based (PE) polymer samples and propylene-based (PP) polymer samples. Each sample (0.5 g) was compression molded into a film, at 5000 psi, 190°C, for two minutes. About 5 to 8 mg of film sample was weighed and placed in a DSC pan. The lid was crimped on the pan to ensure a closed atmosphere. Unless otherwise stated, the sample pan was placed in a DSC cell, and then heated, at a rate of 10°C/min, to a temperature of 180°C for PE (230°C for PP). The sample was kept at this temperature for three minutes. Then the sample was cooled at a rate of 10°C/min to -90°C for PE

(-60°C for PP), and kept isothermally at that temperature for three minutes. The sample was next heated at a rate of 10°C/min, until complete melting (second heat). Unless otherwise stated, melting point ($T_m$) and the glass transition temperature ($T_g$) of each polymer were determined from the second heat curve, and the crystallization temperature ($T_c$) was determined from the first cooling curve. The respective peak temperatures for the $T_m$ and the $T_c$ were recorded. The percent crystallinity can be calculated by dividing the heat of fusion ($H_f$), determined from the second heat curve, by a theoretical heat of fusion of 292 J/g for PE (165 J/g for PP), and multiplying this quantity by 100 (for example, % cryst. = (Hf / 292 J/g) x 100 (for PE)). In DSC measurements, it is common that multiple $T_m$ peaks are observed, and here, the highest temperature peak as the $T_m$ of the polymer is recorded.

FTIR-ATR. Infrared spectra were collected on a Perkin Elmer Frontier Fourier-transform infrared spectrometer (FT-IR) with attenuated total reflection (ATR) accessory (single bounce diamond/ZnSe). Samples were cut with scissors to reveal a clean interior surface, then placed into the accessory and held at a force where the peak absorbance is approximately 0.4 and 4-16 scans were collected depending on spectrum quality. Spectra was collected in at least triplicate to ensure representative sampling of the entire sample. SiH conversion. SiH conversion is the mol% of SiH bonds in the ethylene-SiH polymer that become Si--C bonds ("SiC") as a result of the hydrosilation reaction. SiH conversion was determined by normalizing the peak at 2920 $cm^{-1}$ and setting the baseline to zero at 942 $cm^{-1}$, the Si-H peak at 887 $cm^{-1}$ was then used to determine conversion, %SiH Conversion = 100* (Absorbance at 887 $cm^{-1}$ after the hydrosilation reaction)/ (Absorbance at 887 $cm^{-1}$ before the hydrosilation reaction).

Gel content analysis was performed using a Soxhlet extraction setup following a similar procedure to that described in ASTM D2765. A known mass of the sample ($m_0$) was placed in a pre-weighed glass fiber thimble (mt) and extracted by boiling xylenes (b.p. ~136°C) for 15 hours under $N_2$. Afterwards, the thimble together with any sample residues was dried at 50°C under vacuum. The final mass of the thimble and the residual sample was measured ($m_1$), and the gel content was calculated using the equation below.

$$\text{Gel content\%} = \frac{m_1 - (m_0 + m_t)}{m_0} \times 100\%$$

Gel Permeation Chromatography. For P1 polymer, P2 polymer, and P3 polymer (in the Examples section), the chromatographic system consisted of a PolymerChar GPC-IR (Valencia, Spain) high temperature GPC chromatograph, equipped with an internal IR5 infra-red detector (IR5). The autosampler oven compartment was set at 160° Celsius, and the column compartment was set at 150° Celsius. The columns were four AGILENT "Mixed A" 30 cm, 20-micron linear mixed-bed columns. The chromatographic solvent was 1,2,4-trichloro-benzene, which contained 200 ppm of butylated hydroxytoluene (BHT). The solvent source was nitrogen sparged. The injection volume used was 200 microliters, and the flow rate was 1.0 milliliters/minute.

Calibration of the GPC column set was performed with 21 narrow molecular weight distribution polystyrene standards, with molecular weights ranging from 580 to 8,400,000, and which were arranged in six "cocktail" mixtures, with at least a decade of separation between individual molecular weights. The standards were purchased from Agilent Technologies. The polystyrene standards were prepared at "0.025 grams in 50 milliliters" of solvent, for molecular weights equal to, or greater than, 1,000,000, and at "0.05 grams in 50 milliliters" of solvent, for molecular weights less than 1,000,000. The polystyrene standards were dissolved at 80 degrees Celsius, with gentle agitation, for 30 minutes. The polystyrene standard peak molecular weights were converted to polyethylene molecular weights using Equation 1 (as described in Williams and Ward, J. Polym. Sci., Polym. Let., 6, 621 (1968)):

$$M_{polyethylene} = A \times (M_{polystyrene})^B \quad \text{(EQ1)}$$

where M is the molecular weight, A has a value of 0.4315 and B is equal to 1.0.

A fifth order polynomial was used to fit the respective polyethylene-equivalent calibration points. A small adjustment to A (from approximately 0.375 to 0.445) was made to correct for column resolution and band-broadening effects, such that linear homopolymer polyethylene standard is obtained at 120,000 Mw. The total plate count of the GPC column set was performed with decane (prepared at "0.04 g in 50 milliliters" of TCB, and dissolved for 20 minutes with gentle agitation.) The plate count (Equation 2) and symmetry (Equation 3) were measured on a 200 microliter injection according to the following equations:

$$\text{Plate Count} = 5.54 * \left( \frac{(\text{RV}_{\text{Peak Max}}}{\text{Peak Width at } \frac{1}{2} \text{ height}} \right)^2 \text{ (EQ2)},$$

where RV is the retention volume in milliliters, the peak width is in milliliters, the peak max is the maximum height of the peak, and ½ height is ½ height of the peak maximum; and

$$\text{Symmetry} = \frac{(\text{Rear Peak RV}_{\text{one tenth height}} - \text{RV}_{\text{Peak max}})}{(\text{RV}_{\text{Peak max}} - \text{Front Peak RV}_{\text{one tenth height}})} \text{ (EQ3)},$$

where RV is the retention volume in milliliters, and the peak width is in milliliters, Peak max is the maximum position of the peak, one tenth height is 1/10 height of the peak maximum, and where rear peak refers to the peak tail at later retention volumes than the peak max, and where front peak refers to the peak front at earlier retention volumes than the peak max. The plate count for the chromatographic system should be greater than 18,000, and symmetry should be between 0.98 and 1.22.

Samples were prepared in a semi-automatic manner with the PolymerChar "Instrument Control" Software, wherein the samples were weight-targeted at 2 mg/ml, and the solvent (contained 200 ppm BHT) was added to a pre nitrogen-sparged, septa-capped vial, via the PolymerChar high temperature autosampler. The samples were dissolved for two hours at 160º Celsius under "low speed" shaking.

The calculations of $Mn_{(GPC)}$, $Mw_{(GPC)}$, and $Mz_{(GPC)}$ were based on GPC results using the internal IR5 detector (measurement channel) of the PolymerChar GPC-IR chromatograph according to Equations 4-6, using PolymerChar GPCOne™ software, the baseline-subtracted IR chromatogram at each equally-spaced data collection point (i), and the polyethylene equivalent molecular weight obtained from the narrow standard calibration curve for the point (i) from Equation 1. Equations 4-6 are as follows:

$$Mn(GPC) = \frac{\sum^{i} IR_i}{\sum^{i} \left( IR_i / M_{polyethylene_i} \right)} \quad \text{(EQ 4)},$$

$$Mw(GPC) = \frac{\sum^{i} \left( IR_i \neq M_{polyethylene_i} \right)}{\sum^{i} IR_i} \quad \text{(EQ 5)},$$

and

$$Mz(GPC) = \frac{\sum^{i} \left( IR_i * M_{polyethylene_i}{}^{2} \right)}{\sum^{i} \left( IR_i * M_{polyethylene_i} \right)} \quad \text{(EQ 6)}.$$

In order to monitor the deviations over time, a flowrate marker (decane) was introduced into each sample, via a micropump controlled with the PolymerChar GPC-IR system. This flowrate marker (FM) was used to linearly correct the pump flowrate (Flowrate(nominal)) for each sample, by RV alignment of the respective decane peak within the sample (RV(FM Sample)), to that of the decane peak within the narrow standards calibration (RV(FM Calibrated)). Any changes in the time of the decane marker peak were then assumed to be related to a linear-shift in flowrate (Flowrate(effective)) for the entire run. To facilitate the highest accuracy of a RV measurement of the flow marker peak, a least-squares fitting routine was used to fit the peak of the flow marker concentration chromatogram to a quadratic equation. The first derivative of the quadratic equation was then used to solve for the true peak position. After calibrating the system, based on a flow marker peak, the effective flowrate (with respect to the narrow standards calibration) was calculated as Equation 7: Flowrate(effective) = Flowrate(nominal) * (RV(FM Calibrated) / RV(FM Sample)) (EQ7). Processing of the flow marker peak was done via the PolymerChar GPCOne™ Software. Acceptable flowrate correction is such that the effective flowrate should be within +/-0.7% of the nominal flowrate.

For P4 polymer (in the Examples section), the chromatographic system consisted of a PolymerChar GPC-IR (Valencia, Spain) high temperature GPC chromatograph, equipped with an internal IR5 infra-red detector (IR5). The autosampler oven compartment was set at 160° Celsius, and the column compartment was set at 150° Celsius. The columns were one Agilent PLgel MIXED 7.5 x 50 mm, 20 μm linear mixed-bed guard column followed by four Agilent PLgel MIXED-A 7.5 x 300 mm , 20-micron linear mixed-bed columns. The chromatographic solvent was 1,2,4-trichlorobenzene (TCB), which contained 200 ppm of butylated hydroxytoluene (BHT). The solvent source was nitrogen sparged. The injection volume used was 200 microliters, and the flow rate was 1.0 milliliters/minute.

Calibration of the GPC column set was performed using Agilent EasiCal Polystyrene standards (EasiCal PS-1 and EasiCal PS-2). Each EasiCal system consisted of two different spatulas supporting a mixture of 5 polymer standards (approximately 5 mg) to obtain 20 molecular weights points ranging from approximately 580 to 6,570,000 g/mole. Individual spatulas were added to septa-capped vials, sealed and loaded into the PolymerChar autosampler. PolymerChar Instrument Control Software was utilized to add 8 mL of solvent to each vial and the standards were dissolved for 15 minutes at 160° Celsius under high-speed shaking prior to injection to the chromatography system. The polystyrene standard peak molecular weights were converted to polyethylene molecular weights using Equation 1 (as described in Williams and Ward, J. Polym. Sci., Polym. Let., 6, 621 (1968)):

$$M_{polyethylene} = A \times (M_{polystyrene})^{B} \quad \text{(EQ1)},$$

where M is the molecular weight, A has a value of 0.4315 and B is equal to 1.0.

A third order polynomial was used to fit the respective polyethylene-equivalent calibration points. A small adjustment to A (from approximately 0.375 to 0.445) was made to correct for column resolution and band-broadening effects, such that linear low-density polyethylene standard is obtained at 120,000 Mw. The total plate count of the GPC column set was performed with decane (3% v/v in TCB introduced via micropump.) The plate count (Equation 2) and symmetry (Equation 3) were measured on a 200 microliter injection according to the following equations:

$$\text{Plate Count} = 5.54 * \left(\frac{(RV_{Peak\ Max}}{\text{Peak Width at } \frac{1}{2} \text{ height}}\right)^{2} \text{(EQ2)},$$

where RV is the retention volume in milliliters, the peak width is in milliliters, the peak max is the maximum height of the peak, and ½ height is ½ height of the peak maximum; and

$$\text{Symmetry} = \frac{(\text{Rear Peak } RV_{one\ tenth\ height} - RV_{Peak\ max})}{(RV_{Peak\ max} - \text{Front Peak } RV_{one\ tenth\ height})} \text{(EQ3)},$$

where RV is the retention volume in milliliters, and the peak width is in milliliters, Peak max is the maximum position of the peak, one tenth height is 1/10 height of the peak maximum, and where rear peak refers to the peak tail at later retention volumes than the peak max, and where front peak refers to the peak front at earlier retention volumes than the peak max. The plate count for the chromatographic system should be greater than 18,000, and symmetry should be between 0.98 and 1.22.

Samples were prepared in a semi-automatic manner with the PolymerChar "Instrument Control" Software, wherein the samples were weight-targeted at 2 mg/ml, and the solvent (contained 200 ppm BHT) was added to a septa-capped vial, via the PolymerChar high temperature autosampler. The samples were dissolved for two hours at 160º Celsius under "high speed" shaking.

The calculations of $Mn_{(GPC)}$, $Mw_{(GPC)}$, and $Mz_{(GPC)}$ were based on GPC results using the internal IR5 detector (measurement channel) of the PolymerChar GPC-IR chromatograph according to Equations 4-6, using PolymerChar GPCOne™ software, the baseline-subtracted IR chromatogram at each equally-spaced data collection point (i), and the polyethylene equivalent molecular weight obtained from the narrow standard calibration curve for the point (i) from Equation 1. Equations 4-6 are as follows:

$$Mn(GPC) = \frac{\sum^{i} IR_i}{\sum^{i}\left(IR_i / M_{polyethylene_i}\right)} \quad \text{(EQ 4),}$$

$$Mw(GPC) = \frac{\sum^{i}\left(IR_i \neq M_{polyethylene_i}\right)}{\sum^{i} IR_i} \quad \text{(EQ 5),}$$

and

$$Mz(GPC) = \frac{\sum^{i}\left(IR_i * M_{polyethylene_i}{}^{2}\right)}{\sum^{i}\left(IR_i * M_{polyethylene_i}\right)} \quad \text{(EQ 6).}$$

In order to monitor the deviations over time, a flowrate marker (decane) was introduced into each sample, via a micropump controlled with the PolymerChar GPC-IR system. This flowrate marker (FM) was used to linearly correct the pump flowrate (Flowrate(nominal)) for each sample, by RV alignment of the respective decane peak within the sample (RV(FM Sample)), to that of the decane peak within the narrow standards calibration (RV(FM Calibrated)). Any changes in the time of the decane marker peak were then assumed to be related to a linear-shift in flowrate (Flowrate(effective)) for the entire run. To facilitate the highest accuracy of a RV measurement of the flow marker peak, a least-squares fitting routine was used to fit the peak of the flow marker concentration chromatogram to a quadratic equation. The first derivative of the quadratic equation was then used to solve for the true peak position. After calibrating the system, based on a flow marker peak, the effective flowrate (with respect to the narrow standards calibration) was calculated as Equation 7: Flowrate(effective) = Flowrate(nominal) * (RV(FM Calibrated) / RV(FM Sample)) (EQ7). Processing of the flow marker peak was done via the PolymerChar GPCOne™ Software. Acceptable flowrate correction is such that the effective flowrate should be within +/-0.7% of the nominal flowrate.

For P5 polymer (in the Examples section), the chromatographic system consisted of a PolymerChar GPC-IR (Valencia, Spain) high temperature GPC chromatograph, equipped with an internal IR5 infra-red detector (IR5). The autosampler oven compartment was set at 160º Celsius, and the column compartment was set at 150° Celsius. The columns were one Agilent PLgel MIXED 7.5 x 50 mm, 20 μm linear mixed-bed guard column followed by four Agilent PLgel MIXED-A 7.5 x 300 mm , 20-micron linear mixed-bed columns. The chromatographic solvent was 1,2,4-trichlorobenzene (TCB), which contained 200 ppm of butylated hydroxytoluene (BHT). The solvent source was nitrogen sparged. The injection volume used was 200 microliters, and the flow rate was 1.0 milliliters/minute.

Calibration of the GPC column set was performed using Agilent EasiCal Polystyrene standards (EasiCal PS-1 and EasiCal PS-2). Each EasiCal system consisted of two different spatulas supporting a mixture of 5 polymer standards

(approximately 5 mg) to obtain 20 molecular weights points ranging from approximately 580 to 6,570,000 g/mole. Individual spatulas were added to septa-capped vials, sealed and loaded into the PolymerChar autosampler. PolymerChar Instrument Control Software was utilized to add 8 mL of solvent to each vial and the standards were dissolved for 15 minutes at 160° Celsius under high-speed shaking prior to injection to the chromatography system. The polystyrene standard peak molecular weights were converted to polypropylene molecular weights using Equation 8 (adapted from Williams and Ward, J. Polym. Sci., Polym. Let., 6, 621 (1968)):

$$M_{polyethylene} = A \times (M_{polystyrene})^{B} \quad \text{(EQ8)},$$

where M is the molecular weight, A has a value of 0.647 and B is equal to 1.0.

A third order polynomial was used to fit the respective polypropylene-equivalent calibration points. The total plate count of the GPC column set was performed with decane (3% v/v in TCB introduced via micropump.) The plate count (Equation 9) and symmetry (Equation 3) were measured on a 200 microliter injection according to the following equations:

$$\text{Plate Count} = 5.54 * \left(\frac{(RV_{Peak\ Max}}{\text{Peak Width at } \frac{1}{2} \text{ height}}\right)^{2} \quad \text{(EQ9)},$$

where RV is the retention volume in milliliters, the peak width is in milliliters, the peak max is the maximum height of the peak, and ½ height is ½ height of the peak maximum; and

$$\text{Symmetry} = \frac{(\text{Rear Peak } RV_{one\ tenth\ height} - RV_{Peak\ max})}{(RV_{Peak\ max} - \text{Front Peak } RV_{one\ tenth\ height})} \quad \text{(EQ3)},$$

where RV is the retention volume in milliliters, and the peak width is in milliliters, Peak max is the maximum position of the peak, one tenth height is 1/10 height of the peak maximum, and where rear peak refers to the peak tail at later retention volumes than the peak max, and where front peak refers to the peak front at earlier retention volumes than the peak max. The plate count for the chromatographic system should be greater than 18,000, and symmetry should be between 0.98 and 1.22.

Samples were prepared in a semi-automatic manner with the PolymerChar "Instrument Control" Software, wherein the samples were weight-targeted at 2 mg/ml, and the solvent (contained 200 ppm BHT) was added to a septa-capped vial, via the PolymerChar high temperature autosampler. The samples were dissolved for two hours at 160° Celsius under "high speed" shaking.

The calculations of $Mn_{(GPC)}$, $Mw_{(GPC)}$, and $Mz_{(GPC)}$ were based on GPC results using the internal IR5 detector (measurement channel) of the PolymerChar GPC-IR chromatograph according to Equations 10-12, using PolymerChar GPCOne™ software, the baseline-subtracted IR chromatogram at each equally-spaced data collection point (i), and the polyethylene equivalent molecular weight obtained from the narrow standard calibration curve for the point (i) from Equation 1. Equations 10-12 are as follows:

$$Mn(GPC) = \frac{\sum^{i} IR_i}{\sum^{i}\left(IR_i / M_{polyethylene_i}\right)} \quad \text{(EQ 10)},$$

$$Mw(GPC) = \frac{\sum^{i}\left(IR_i * M_{polyethylene_i}\right)}{\sum^{i} IR_i} \quad \text{(EQ 11)},$$

$$Mz(GPC) = \frac{\sum^{i}\left(IR_i * M_{polyethylene_i}{}^{2}\right)}{\sum^{i}\left(IR_i * M_{polyethylene_i}\right)} \quad \textbf{(EQ 12).}$$

In order to monitor the deviations over time, a flowrate marker (decane) was introduced into each sample, via a micropump controlled with the PolymerChar GPC-IR system. This flowrate marker (FM) was used to linearly correct the pump flowrate (Flowrate(nominal)) for each sample, by RV alignment of the respective decane peak within the sample (RV(FM Sample)), to that of the decane peak within the narrow standards calibration (RV(FM Calibrated)). Any changes in the time of the decane marker peak were then assumed to be related to a linear-shift in flowrate (Flowrate(effective)) for the entire run. To facilitate the highest accuracy of a RV measurement of the flow marker peak, a least-squares fitting routine was used to fit the peak of the flow marker concentration chromatogram to a quadratic equation. The first derivative of the quadratic equation was then used to solve for the true peak position. After calibrating the system, based on a flow marker peak, the effective flowrate (with respect to the narrow standards calibration) was calculated as Equation 7: Flowrate(effective) = Flowrate(nominal) * (RV(FM Calibrated) / RV(FM Sample)) (EQ7). Processing of the flow marker peak was done via the PolymerChar GPCOne™ Software. Acceptable flowrate correction is such that the effective flowrate should be within +/-0.7% of the nominal flowrate.

Melt Index. The melt index (or "$I_2$") of an ethylene-based polymer is measured in accordance with ASTM D-1238, condition 190°C/2.16 kg (melt index I10 at 190°C/10.0 kg). The $I_{10}/I_2$ was calculated from the ratio of $I_{10}$ to the $I_2$. The melt flow rate MFR of a propylene-based polymer is measured in accordance with ASTM D-1238, condition 230°C/2.16 kg.

Nuclear Magnetic Resonance (NMR) Characterization of Terpolymers. For $^{13}C$ NMR experiments, samples were dissolved, in 10 mm NMR tubes, in tetrachloroethane-$d_2$ (with or without 0.025 M $Cr(acac)_3$). The concentration was approximately 300 mg/2.8 mL. Each tube was then heated in a heating block set at 110ºC. The sample tube was repeatedly vortexed and heated to achieve a homogeneous flowing fluid. The $^{13}C$ NMR spectrum was taken on a BRUKER AVANCE 600 MHz spectrometer, equipped with a 10 mm C/H DUAL cryoprobe. The following acquisition parameters were used: 60 seconds relaxation delay, 90 degree pulse of 12.0 μs, 256 scans. The spectrum was centered at 100 ppm, with a spectral width of 250 ppm. All measurements were taken without sample spinning at 110°C. The $^{13}C$ NMR spectrum was referenced to "74.5 ppm" for the resonance peak of the solvent. For a sample with Cr, the data was taken with a "7 seconds relaxation delay" and 1024 scans.

For $^{1}H$ NMR experiments, each sample was dissolved, in 8 mm NMR tubes, in tetrachloroethane-$d_2$ (with or without 0.001 M $Cr(acac)_3$). The concentration was approximately100 mg/1.8 mL. Each tube was then heated in a heating block set at 110°C. The sample tube was repeatedly vortexed and heated to achieve a homogeneous flowing fluid. The $^{1}H$ NMR spectrum was taken on a BRUKER AVANCE 600 MHz spectrometer, equipped with a 10 mm C/H DUAL cryoprobe. A standard single pulse $^{1}H$ NMR experiment was performed. The following acquisition parameters were used: 70 seconds relaxation delay, 90 degree pulse of 17.2 μs, 32 scans. The spectrum was centered at 1.3 ppm, with a spectral width of 20 ppm. All measurements were taken, without sample spinning, at 110°C. The $^{1}H$ NMR spectrum was referenced to "5.99 ppm" for the resonance peak of the solvent (residual protonated tetrachloroethane). For a sample with Cr, the data was taken with a "16 seconds relaxation delay" and 128 scans

SiH Conversion. See FTIR-ATR test method. The percent (%) SiH conversion is described under the FTIR-ATR test method.

DETAILED DESCRIPTION

The present disclosure provides a process. In an embodiment, the process includes melt blending, in the presence of a platinum-group metal catalyst, (i) an olefin-SiH polymer with (ii) a monovinyl graft component having the Structure (1) $H_2C=CH_2$-X, wherein X of Structure (1) is a heterohydrocarbyl group containing a moiety selected from epoxide, ether, ester, alcohol, alkyl chain, amine, anhydride, ketone, phenol, and combinations thereof. The process includes grafting the monovinyl graft component to the olefin-SiH polymer to form a functionalized olefin-Si polymer. The functionalized olefin-Si polymer has a gel content from 0% to less than 3%, as measured in accordance with ASTM D2765-16.

The process includes melt blending (i) an olefin-SiH polymer with (ii) a monovinyl graft component in the presence of a platinum-group metal catalyst. The olefin-SiH polymer can be an ethylene-SiH polymer (an ethylene-based polymer) or a propylene-SiH polymer (a propylene-based polymer). In an embodiment, the olefin-SiH polymer is an ethylene-SiH polymer and is composed of (1) ethylene monomer, (2) from 0.1 wt% to 3.9 wt% of a SiH comonomer, and (3) optional $C_3$-$C_{12}$ α-olefin termonomer or $C_4$-$C_8$ α-olefin termonomer.

In an embodiment, the olefin-SiH polymer is a propylene-SiH polymer and is composed of (1) propylene monomer, (2) from 0.1 wt% to 3.9 wt% of a SiH comonomer, and (3) optional $C_2$ α-olefin (ethylene) or $C_4$-$C_8$ α-olefin

termonomer.

An "SiH comonomer," (interchangeably referred to as "SiH") as used herein, is a silane monomer of Formula 1:

(Formula 1) A-$(SiBC\text{-}O)_x$-Si-EFH

wherein A is an alkenyl group,
B is a hydrocarbyl group or hydrogen,
C is a hydrocarbyl group or hydrogen, and
wherein B and C may be the same or different, and further B is a hydrocarbyl group, C is a hydrocarbyl group, and further B and C are the same;
H is hydrogen, and $x \geq 0$;
E is a hydrocarbyl group or hydrogen,
F is a hydrocarbyl group or hydrogen, E and F may be the same or different, when E is a hydrocarbyl group F is a hydrocarbyl group, E and F may be the same hydrocarbyl group. Nonlimiting samples of suitable SiH comonomer of Formula 1 include compounds s1) (allyldimethylsilane), s2) (propenyldimethylsilane), s3) (butenyldimethylsilane), s4) (hexenyldimethylsilane), s5) (octenyldimethylsilane), s6), (decenyldimethylsilane), s7) norbornylethyldimethylsilane, s8) octahydrodimethanonaphthalenylethyldimethysilane, s9) vinyltetramethyldisiloxane, s10) allyltetramethyldisiloxane, s11) butenyltetramethyldisiloxane, s12, hexenyltetramethyldisiloxane, s13) octenyltetramethyldisiloxane, s14) decenyltetramethyldisiloxane, s15) norbornylethyltetramethyldisiloxane, s16) octahydrodimethano naphthalenylethyltetramethyldisiloxane below:

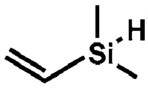 (s1), 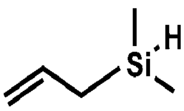 (s2), 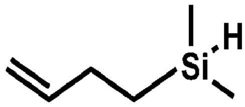 (s3), 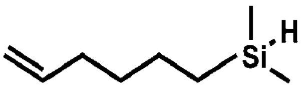 (s4),

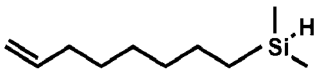 (s5), 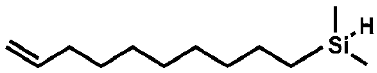 (s6), 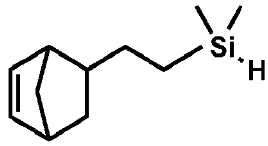 (s7),

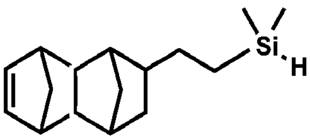 (s8), 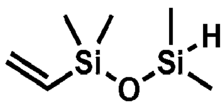 (s9), 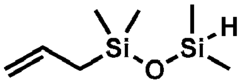 (s10),

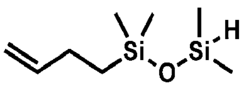 (s11), 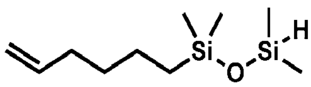 (s12), 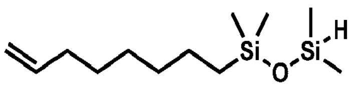 (s13),

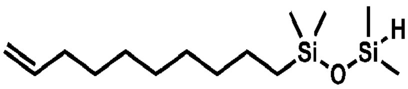 (s14), 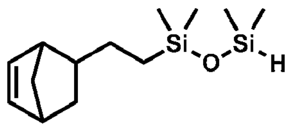 (s15),

or

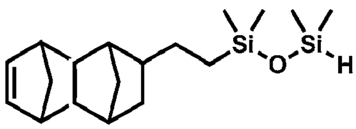 (s16).

In an embodiment, the SiH comonomer is selected from allyldimethylsilane, hexenyldimethylsilane, octenyldimethylsilane, and hexenyltetramethyldisiloxane.

In an embodiment, the ethylene-SiH polymer is an ethylene/α-olefin/SiH terpolymer. The α-olefin in the ethylene/α-olefin/SiH comonomer terpolymer can be a $C_3$-$C_{12}$ α-olefin or a $C_4$-$C_8$ α-olefin. Nonlimiting examples of suitable α-olefin include propylene, butene, hexene, octene, and ethylidene norbornene for respective ethylene/propylene SiH terpolymer, ethylene/butene/SiH terpolymer, ethylene/hexene/SiH terpolymer, ethylene/octene/SiH terpolymer and ethylene/ethylidene norbornene/SiH terpolymer.

In an embodiment, the ethylene/α-olefin/SiH terpolymer is an ethylene/octene/SiH terpolymer. Nonlimiting examples of suitable ethylene/octene/SiH terpolymer include ethylene/octene/hexenyldimethylsilane (HDMS) terpolymer, ethylene/octene/octenyldimethylsilane (ODMS) terpolymer, ethylene/octene/allyldimethylsilane and combinations thereof.

In an embodiment, the ethylene-SiH polymer is ethylene/octene/hexenyldimethylsilane.

In an embodiment, the ethylene-SiH polymer is ethylene/octene/allyldimethylsilane (ADMS) terpolymer.

In an embodiment, the olefin-SiH polymer is a propylene/ethylene SiH polymer. In a further embodiment, the propylene/ethylene/SiH polymer (a propylene-based polymer) is propylene/ethylene/HDMS terpolymer.

A monovinyl graft component is melt blended with the ethylene-SiH polymer in the presence of a platinum-group metal catalyst. The monovinyl monovinyl graft component has a single vinyl group and has the Structure (1)

Structure (1) $H_2C{=}CH_2\text{-}X$

wherein X of Structure (1) is a $C_4$-$C_{20}$ heterohydrocarbyl group with one or more heteroatoms selected from O, N, and Si. In an embodiment, "X" of Structure (1) is a $C_4$-$C_{20}$ heterohydrocarbyl group that includes a moiety selected from epoxide, ether, ester, alcohol, amine, anhydride, ketone, phenol, alkoxysilane, and combinations thereof.

In an embodiment, the monovinyl graft component of Structure (1) is a $C_4$-$C_{20}$ heterohydrocarbyl group, or a $C_6$-$C_{18}$ heterohydrocarbyl group with a one or more heteroatoms selected from O, N, and Si. In a further embodiment, Structure (1) is selected from allyl glycidyl ether, 5-hexen-2-one, eugenol, methyl 10-undecenoate, vinyltriethoxysilane, N,N-diethylallylamine, 2,6-di-tert-butyl-4-vinylphenol, and tert-butyl bicyclo[2.2.1] hept-5-ene-2-carboxylate.

The process includes melt blending (i) the ethylene-SiH polymer with (ii) the monovinyl graft component in the presence of a platinum-group metal catalyst. A "platinum-group metal catalyst," as used herein, is an organo-metallic compound containing a metal selected from iridium (Ir), palladium (Pd), platinum (Pt), rhodium (Rh), and ruthenium (Ru), the organo-metallic compound accelerating the hydrosilylation reaction between the SiH moiety of the ethylene-SiH polymer and the vinyl group of the monovinyl graft component of Structure (1).

In an embodiment, the platinum-group metal catalyst includes a metal selected from Ir, Pt, and Rh. In a further embodiment, the platinum-group metal catalyst includes platinum (Pt).

In an embodiment, the platinum-group metal catalyst is $(H_3O)_2(PtCl_6)(H_2O)_x$, in a solution of isopropyl alcohol ("Speier's catalyst") wherein x is an integer from 0 to 6, or x is 0, or 1, or 2, or 3, or 4, or 5, or 6.

The ethylene-SiH polymer (or propylene-SiH polymer), the monofunctional monovinyl graft component, and the platinum-group metal catalyst are melt blended, or otherwise mixed, at a temperature and for a length of time sufficient to fully homogenize the mixture. Melt blending is conducted by way of batch mixing or continuous mixing at a temperature from 80°C to 160°C, or from 80°C to 120°C for 1 minute to 20 minutes, or from 2 minutes to 15 minutes, or from 3 minutes to 10 minutes. The melt blending, in the presence of the platinum-group metal catalyst, initiates a hydrosilylation reaction between the Si-H moiety of the ethylene-SiH polymer (or propylene-SiH polymer) and the vinyl group of the monovinyl graft component, thereby grafting the monovinyl graft component to the ethylene-SiH polymer (or propylene-SiH polymer) to form a functionalized ethylene-Si polymer (or functionalized propylene-Si polymer). A "functionalized ethylene-Si polymer," as used herein, is the reaction product between the ethylene-SiH polymer and the monovinyl graft component whereby the monovinyl graft component is grafted to, or otherwise covalently bonded to, the ethylene-SiH polymer at the silicon atom of the SiH moiety by way of a Si-C-C-Y bond, wherein "Y" is a $C_4$-$C_{20}$ heterohydrocarbyl group, or a $C_6$-$C_{18}$ heterohydrocarbyl group with a one or more heteroatoms selected from O, N, and Si. In an embodiment, "Y" is a $C_4$-$C_{20}$ heterohydrocarbyl group and includes a moiety selected from epoxide, ether, ester, alcohol, amine, anhydride, ketone, phenol, and combinations thereof.

A "functionalized propylene-Si polymer," as used herein, is the reaction product between the propylene-SiH polymer and the monovinyl graft component whereby the monovinyl graft component is grafted to, or otherwise covalently bonded to, the propylene-SiH polymer at the silicon atom of the SiH moiety by way of a Si-C-C-Y bond, wherein "Y" is a $C_4$-$C_{20}$ heterohydrocarbyl group, or a $C_6$-$C_{18}$ heterohydrocarbyl group with a one or more heteroatoms selected from O, N, and Si. In an embodiment, "Y" is a $C_4$-$C_{20}$ heterohydrocarbyl group and includes a moiety selected from epoxide, ether, ester, alcohol, amine, anhydride, ketone, phenol, and combinations thereof.

In an embodiment, the process includes forming a functionalized ethylene-Si polymer (or functionalized propylene-Si polymer) having the Structure (2) below

Structure (2)

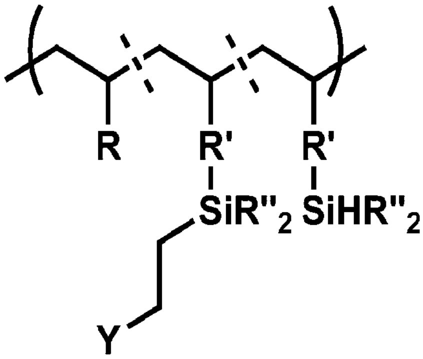

wherein

R is selected from the group consisting of a hexyl group, a methyl group, a hydrogen atom, and combinations thereof,
R' is selected from the group consisting of $CH_2$ and $-(CH_2)_4-$,
R" is $CH_3$, and
Y is a heterohydrocarbonyl group with a moiety selected from the group consisting of epoxide, ether, ester, alcohol, alkyl chain, amine, anhydride, ketone, phenol, and combinations thereof. In a further embodiment, Y is a compound selected from s17) to s24) below:

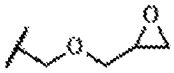

s17),

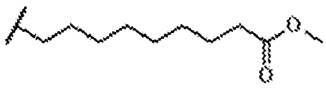

s18),

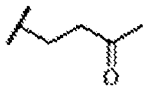

s19),

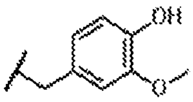

S20),

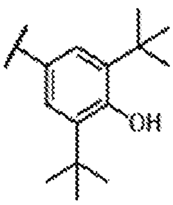

S21),

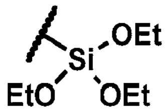

S22),

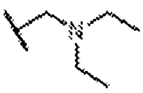

s23), and

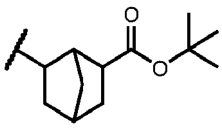

s24).

In an embodiment, melt blending is conducted by way of batch mixing in a batch mixer. The ethylene-SiH polymer (or propylene-Si polymer), the monovinyl graft component, and the platinum-group metal catalyst are added to a batch mixer and melt blended, or otherwise mixed, at a temperature from 80°C to 160°C, or from 100°C to 140°C for 1 minute to 20 minutes, or from 2 minutes to 15 minutes, or from 3 minutes to 10 minutes. Nonlimiting examples of suitable batch mixers include a BANBURY™ mixer, a BOLLING™ mixer, or a HAAKE™ mixer. The batch mixing forms a functionalized ethylene-Si polymer (or propylene-Si polymer) having the Structure (2).

In an embodiment, melt blending is conducted by way of continuous mixing, or extrusion, in an extruder. The extruder can be a continuous single screw extruder or a continuous twin screw extruder. The ethylene-SiH polymer (or propylene-Si polymer), the monovinyl graft component, and the platinum-group metal catalyst are introduced into an extruder and melt blended, or otherwise mixed, at a temperature from 80°C to 160°C, or from 100°C to 140°C for 1 minute to 20 minutes, or from 2 minutes to 15 minutes, or from 3 minutes to 10 minutes to form a homogenous composition.

Nonlimiting examples of suitable extruders include a FARREL™ continuous mixer, a COPERION™ twin screw extruder, or a BUSS™ kneading continuous extruder. The homogeneous composition exits an exit die of the extruder as an extrudate that is a functionalized ethylene-Si polymer (or propylene-Si polymer) having the Structure (2).

In an embodiment, the process includes melt blending from (i) 50 wt % to 98 wt% of an ethylene-SiH polymer that is an ethylene/$C_3$-$C_{12}$ $\alpha$-olefin/SiH terpolymer with (ii) from 50 wt% to 2 wt% of a monovinyl graft component of Structure (1) (weight percent based on total weight of the ethylene-SiH polymer and the monovinyl graft component), in the presence of from 1 ppm to 60 ppm, or from 2 ppm to 50 ppm of a platinum group metal catalyst and forming a functionalized ethylene-Si polymer with the Structure (2).

In an embodiment, the process includes forming a functionalized ethylene-Si polymer (with Structure 2) having a gel content from 0% to less than 2.5%. Gel content is measured in accordance with ASTM D2765-16.

In an embodiment, the process includes melt blending at a temperature from 80°C to 120°C for a duration from one minute to 20 minutes from (i) 50 wt % to 98 wt% of an ethylene-SiH polymer that is an ethylene/$C_3$-$C_{12}$ $\alpha$-olefin/SiH terpolymer with (ii) from 50 wt% to 2 wt% of a monovinyl graft component of Structure (1) (weight percent based on total weight of the ethylene-SiH polymer and the monovinyl graft component), in the presence of from 1 ppm to 60 ppm, or from 2 ppm to 50 ppm of a platinum group metal, and converting greater than 90% SiH to SiC, or from greater than 93%, or from greater than 95%, or from greater than 95% to 99% to form the functionalized ethylene-Si polymer with the Structure (2).

In an embodiment, the process occurs (i) in the absence of a solvent, (ii) in the absence of a peroxide, and (iii) a combination of (i) and (ii). A "solvent," as used herein, is a liquid including water, hydrocarbon, alcohol, ketone, ester, acid, base and combinations thereof (1) present in a sufficient amount to dissolve the ethylene-SiH polymer (or propylene-Si polymer) (2) at a temperature above the melting temperature of the ethylene-SiH polymer (or propylene-Si polymer). It is understood that the carrier liquid for the Speier's catalyst (isopropanol) is not a solvent, as defined herein, because ethylene-SiH polymer (or propylene-Si polymer) is not soluble in isopropanol. Even if soluble, the amount of isopropanol is so small that the ethylene-SiH polymer (or propylene-Si polymer) would not be dissolved and the isopropanol would evaporate at the melting temperature of the ethylene-SiH polymer (or propylene-Si polymer), as the boiling point of isopropanol is 82.5°C.

In an embodiment, the process includes melt blending at a temperature from 80°C to 120°C for a duration from one minute to 20 minutes from (i) 50 wt % to 98 wt% of an ethylene-SiH polymer that is an ethylene/$C_3$-$C_{12}$ $\alpha$-olefin/SiH terpolymer with (ii) from 50 wt% to 2 wt% of a monovinyl graft component of Structure (1) (weight percent based on total weight of the ethylene-SiH polymer and the monovinyl graft component), in the presence of from 1 ppm to 60 ppm, or from 2 ppm to 50 ppm of a platinum-group metal catalyst. The monovinyl graft component is selected from allyl glycidyl ester, 5-hexene-2-one, eugenol, methyl 10-undecenoate, vinyltriethoxysilane, and 2,6-di-tert-butyl-4-vinylphenol, triethyl amine, and combinations thereof. The process includes forming a functionalized ethylene-Si polymer with Structure (2).

In an embodiment, the process includes melt blending at a temperature from 80°C to 120°C for a duration from one minute to 20 minutes from (i) 50 wt % to 98 wt% of an ethylene-SiH polymer that is ethylene/octene/hexenyldimethylsilane (HDMS) terpolymer with (ii) from 50 wt% to 2 wt% of a monovinyl graft component of Structure (1) that is allyl glycidyl ester (weight percent based on total weight of the ethylene-SiH polymer and the monovinyl graft component), in the presence of from 1 ppm to 60 ppm, or from 2 ppm to 50 ppm of a platinum-group metal catalyst. The process includes forming a functionalized ethylene-Si polymer having the Structure (3)

Structure (3)

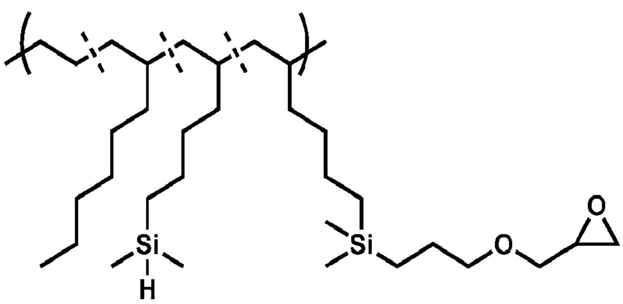

In an embodiment, the process includes melt blending at a temperature from 80°C to 120°C for a duration from one minute to 20 minutes from (i) 50 wt % to 98 wt% of an ethylene-SiH polymer that is ethylene/octene/hexenyldimethylsilane (HDMS) terpolymer with (ii) from 50 wt% to 2 wt% of a monovinyl graft component of Structure (1) that is 5-hexene-2-one (weight percent based on total weight of the ethylene-SiH polymer and the monovinyl graft component), in the presence of from 1 ppm to 60 ppm, or from 2 ppm to 50 ppm of a platinum-group metal catalyst. The process includes forming a functionalized ethylene-Si polymer having the Structure (4)

Structure (4)

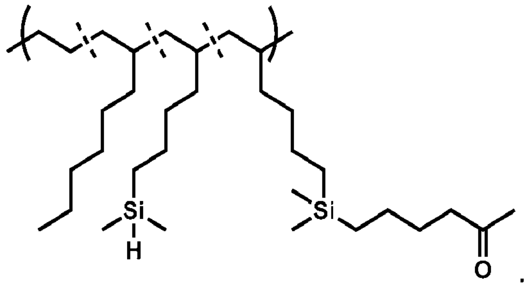

In an embodiment, the process includes melt blending at a temperature from 80°C to 120°C for a duration from one minute to 20 minutes from (i) 50 wt % to 98 wt% of an ethylene-SiH polymer that is ethylene/octene/hexenyldimethylsilane (HDMS) terpolymer with (ii) from 50 wt% to 2 wt% of a monovinyl graft component of Structure (1) that is eugenol (weight percent based on total weight of the ethylene-SiH polymer and the monovinyl graft component), in the presence of from 1 ppm to 60 ppm, or from 2 ppm to 50 ppm of a platinum-group metal catalyst. The process includes forming a functionalized ethylene-Si polymer having the Structure (5)

Structure (5)

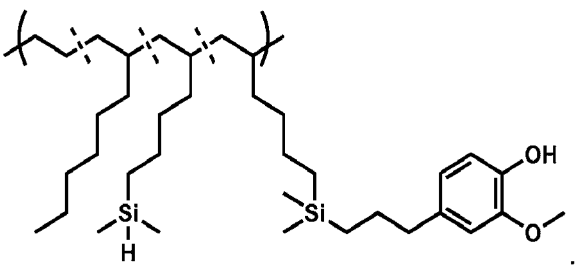

In an embodiment, the process includes melt blending at a temperature from 80°C to 120°C for a duration from one minute to 20 minutes from (i) 50 wt % to 98 wt% of an ethylene-SiH polymer that is ethylene/octene/hexenyldimethylsilane (HDMS) terpolymer with (ii) from 50 wt% to 2 wt% of a monovinyl graft component of Structure (1) that is methyl 10-undecenoate (weight percent based on total weight of the ethylene-SiH polymer and the monovinyl graft component), in the presence of from 1 ppm to 60 ppm, or from 2 ppm to 50 ppm of a platinum-group metal catalyst. The process includes forming a functionalized ethylene-Si polymer having the Structure (6)

Structure (6)

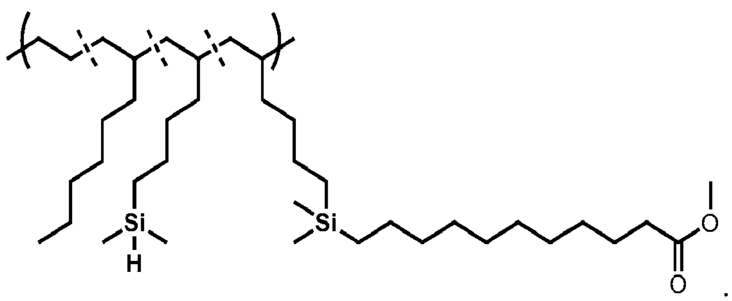

In an embodiment, the process includes melt blending at a temperature from 80°C to 120°C for a duration from one minute to 20 minutes from (i) 50 wt % to 98 wt% of an ethylene-SiH polymer that is ethylene/octene/hexenyldimethylsilane (HDMS) terpolymer with (ii) from 50 wt% to 2 wt% of a monovinyl graft component of Structure (1) that is vinyltriethoxysilane (weight percent based on total weight of the ethylene-SiH polymer and the monovinyl graft component), in the presence of from 1 ppm to 60 ppm, or from 2 ppm to 50 ppm of a platinum-group metal catalyst. The process includes forming a functionalized ethylene-Si polymer having the Structure (7)

Structure (7)

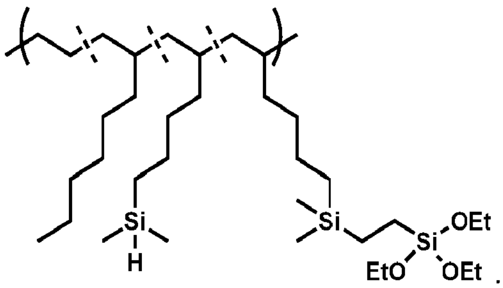

In an embodiment, the process includes melt blending at a temperature from 80°C to 120°C for a duration from one minute to 20 minutes from (i) 50 wt % to 98 wt% of an ethylene-SiH polymer that is ethylene/octene/hexenyldimethylsilane (HDMS) terpolymer with (ii) from 50 wt% to 2 wt% of a monovinyl graft component of Structure (1) that is 2,6-di-tert-butyl-4-vinylphenol (weight percent based on total weight of the ethylene-SiH polymer and the monovinyl graft component), in the presence of from 1 ppm to 60 ppm, or from 2 ppm to 50 ppm of a platinum-group metal catalyst. The process includes forming a functionalized ethylene-Si polymer having the Structure (8)

Structure (8)

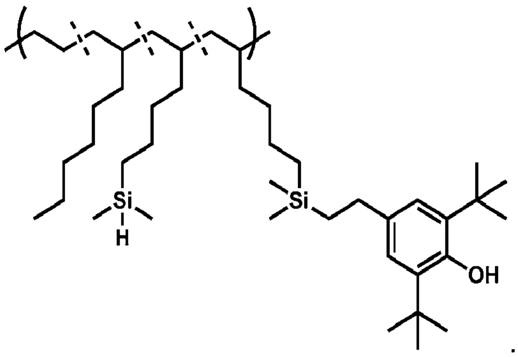

In an embodiment, the process includes melt blending at a temperature from 80°C to 120°C for a duration from one minute to 20 minutes from (i) 50 wt % to 98 wt% of an ethylene-SiH polymer that is ethylene/octene/hexenyldimethylsilane (HDMS) terpolymer with (ii) from 50 wt% to 2 wt% of a monovinyl graft component of Structure (1) that is diethylallylamine (weight percent based on total weight of the ethylene-SiH polymer and the monovinyl graft component), in the presence of from 1 ppm to 60 ppm, or from 2 ppm to 50 ppm of a platinum-group metal catalyst. The process includes forming a functionalized ethylene-Si polymer having the Structure (9)

Structure (9)

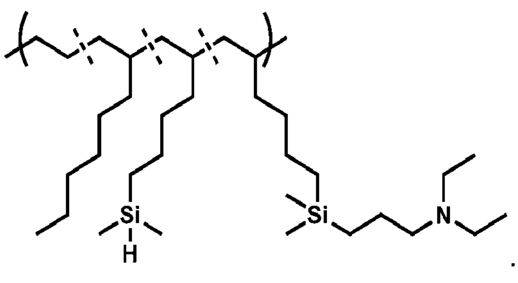

In an embodiment, the process includes melt blending at a temperature from 80°C to 120°C for a duration from one minute to 20 minutes from (i) 50 wt % to 98 wt% of an ethylene-SiH polymer that is ethylene/octene/hexenyldimethylsilane (HDMS) terpolymer with (ii) from 50 wt% to 2 wt% of a monovinyl graft component of Structure (1) that is diethylallylamine (weight percent based on total weight of the ethylene-SiH polymer and the monovinyl graft component), in the presence of from 1 ppm to 60 ppm, or from 2 ppm to 50 ppm of a platinum-group metal catalyst. The process includes forming a functionalized ethylene-Si polymer having the Structure (9)

Structure 10

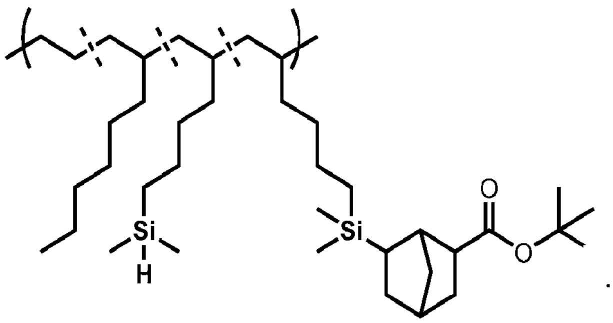

In an embodiment, the process includes melt blending at a temperature from 80°C to 120°C for a duration from one minute to 20 minutes from (i) 50 wt % to 98 wt% of an ethylene-SiH polymer that is ethylene/octene/hexenyldimethylsilane (HDMS) terpolymer with (ii) from 50 wt% to 2 wt% of a monovinyl graft component of Structure (1) that is tert-butyl bicyclo[2.2.1]hept-5-ene-2-carboxylate (weight percent based on total weight of the ethylene-SiH polymer and the monovinyl graft component), in the presence of from 1 ppm to 60 ppm, or from 2 ppm to 50 ppm of a platinum-group metal catalyst. The process includes forming a functionalized ethylene-Si polymer having the Structure (10).

Applicant discovered the monovinyl graft component unexpectedly does not undergo crosslinking during hydrosilylation. The resultant functionalized ethylene-Si polymer of Structure (2) has little, or no, gel content, or a gel content from 0% to less than 2.5% gel content. Applicant discovered a process to produce functionalized polyolefin (functionalized polyethylene) without the use of solvent (a solventless process), without the use of peroxide (a peroxide-free process), and without the use/need of an inhibitor or antioxidant (an antioxidant-free process). The present process advantageously reduces production costs. The present process obtains monomeric grafts as opposed to oligo/polymeric grafts in solvent-based free-radical grafting of polyethylene, for example. The ability of the present process to obtain monomeric grafts in polyethylene is unexpected.

The present disclosure provides a composition. In an embodiment, the composition includes a functionalized ethylene-Si polymer (or a functionalized propylene-Si polymer) with the Structure (2)

Structure (2)

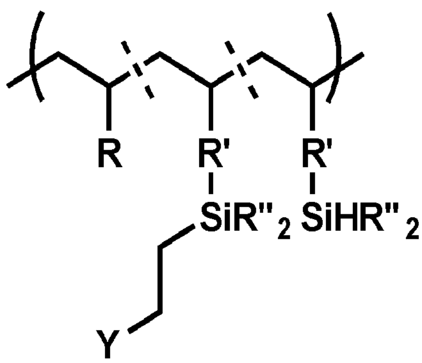

wherein

R is selected from the group consisting of a hexyl group, a methyl group, a hydrogen atom, and combinations thereof,

R' is selected from the group consisting of $CH_2$ and $-(CH_2)_4-$,

R" is $CH_3$,

Y is a compound selected from structures s17)-s24) below

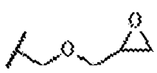
s17),

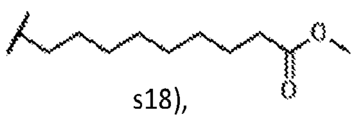
s18),

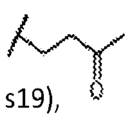
s19),

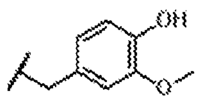

s20),

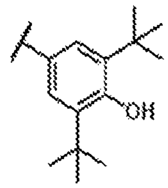

s21),

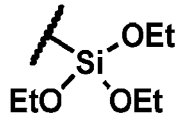

s22),

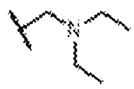

s23), and

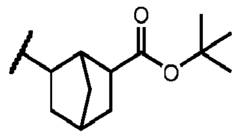

s24).

In an embodiment, the composition is a functionalized ethylene-Si polymer (or a functionalized propylene-Si polymer) with the Structure (3)

Structure (3)

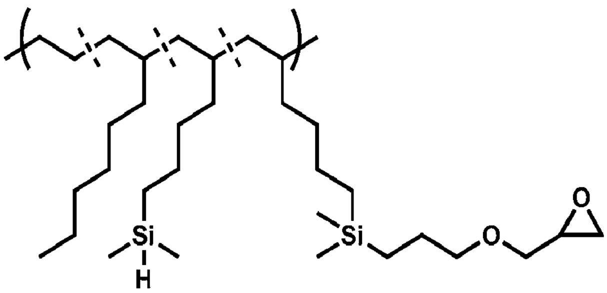

.

In an embodiment, the composition is a functionalized ethylene-Si polymer (or a functionalized propylene-Si polymer) with the Structure (4)

Structure (4)

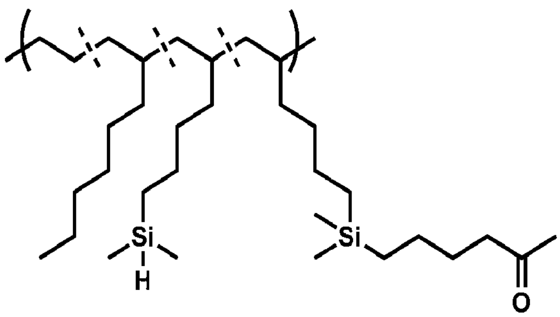

.

In an embodiment, the composition is a functionalized ethylene-Si polymer (or a functionalized propylene-Si polymer) with the Structure (5)

Structure (5)

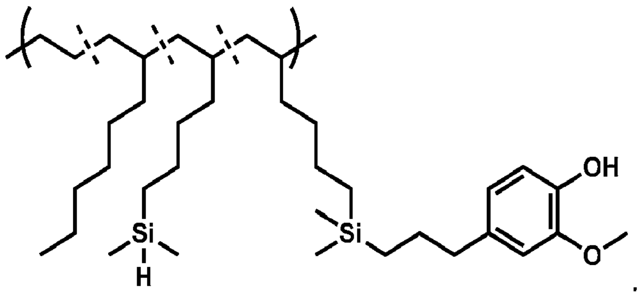

In an embodiment, the composition is a functionalized ethylene-Si polymer (or a functionalized propylene-Si polymer) with the Structure (6)

Structure (6)

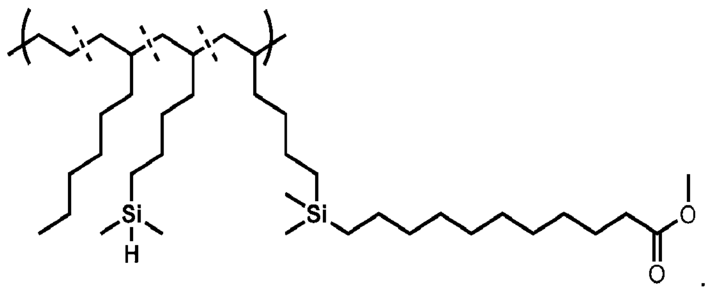

In an embodiment, the composition is a functionalized ethylene-Si polymer (or a functionalized propylene-Si polymer) with the Structure (7)

Structure (7)

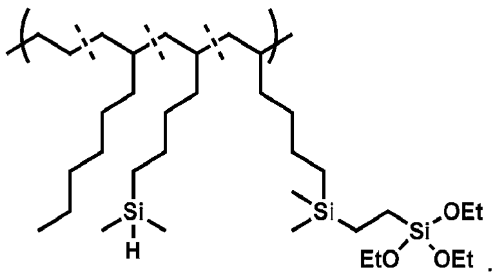

In an embodiment, the composition is a functionalized ethylene-Si polymer (or a functionalized propylene-Si polymer) with the Structure (8)

Structure (8)

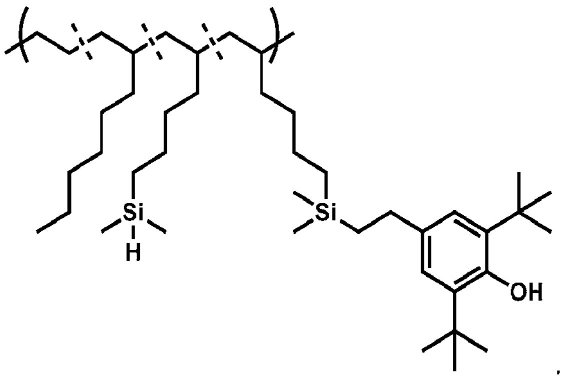

In an embodiment, the composition is a functionalized ethylene-Si polymer (or a functionalized propylene-Si polymer) with the Structure (9)

Structure (9)

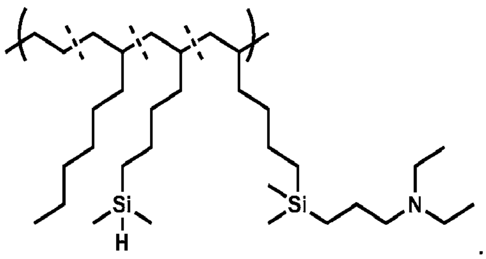

In an embodiment, the composition is a functionalized ethylene-Si polymer (or a functionalized propylene-Si polymer) with the Structure (10)

Structure (10)

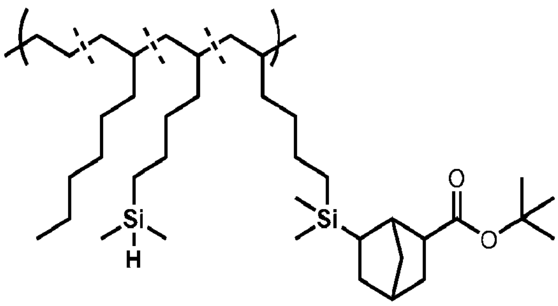

By way of example, and not limitation, some embodiments of the present disclosure will now be described in detail in the following examples.

EXAMPLES

A. Syntheses for Polymers P1, P2, P3, P4, and P5 and Properties

The ethylene/propylene/silane co-polymerizations to produce P5 (propylene-SiH polymer) were conducted in a batch reactor designed for ethylene homo-polymerizations and co-polymerizations. The reactor was equipped with electrical heating bands, and an internal cooling coil containing chilled glycol. Both the reactor and the heating/cooling system were controlled and monitored by a process computer. The bottom of the reactor was fitted with a dump valve, which emptied the reactor contents into a dump pot that was vented to the atmosphere. All chemicals used for polymerization and the catalyst solutions were run through purification columns prior to use. The ISOPAR-E, propylene,

ethylene, and silane monomers were also passed through columns. Ultra-high purity grade nitrogen (Airgas) and hydrogen (Airgas) were used. The catalyst cocktail was prepared by mixing, in an inert glove box, the scavenger (MMAO), activator (bis(hydrogenated tallow alkyl)methyl tetrakis(pentafluorophenyl)borate(1<->) amine), and catalyst with the appropriate amount of toluene, to achieve a desired molarity solution. The solution was then diluted with ISOPAR-E or toluene to achieve the desired quantity for the polymerization, and drawn into a syringe for transfer to a catalyst shot tank.

In a typical polymerization, the reactor was loaded with ISOPAR-E, and propylene via independent flow meters. The silane monomer was then added via a shot tank piped in through an adjacent glove box. After the solvent/comonomer addition, hydrogen (if desired) was added, while the reactor was heated to a polymerization setpoint of 120°C. The ethylene was then added to the reactor via a flow meter, at the desired reaction temperature, to maintain a predetermined reaction pressure set point. The catalyst solution was transferred into the shot tank, via syringe, and then added to the reactor via a high pressure nitrogen stream, after the reactor pressure set point was achieved. A run timer was started upon catalyst injection, after which, an exotherm was observed, as well as a decrease in the reactor pressure, to indicate a successful run.

Ethylene was then added using a pressure controller to maintain the reaction pressure set point in the reactor. The polymerizations were run for set time or ethylene uptake, after which, the agitator was stopped, and the bottom dump valve was opened to empty the reactor contents into dump pot. The pot contents were poured into trays, which were placed in a fume hood, and the solvent was allowed to evaporate overnight. The trays containing the remaining polymer were then transferred to a vacuum oven, and heated to 100°C, under reduced pressure, to remove any residual solvent. After cooling to ambient temperature, the polymers were weighed for yield/efficiencies, transferred to containers for storage, and submitted for analytical testing.

The interpolymers P1, P2 and P3 (ethylene-SiH polymers) were each prepared in a one gallon polymerization reactor that was hydraulically full, and operated at steady state conditions. The solvent was ISOPAR-E, supplied by the ExxonMobil Chemical Company. 5-Hexenyldimethylsilane (HDMS) supplied by Gelest was used as a termonomer and was purified over AZ-300 alumina supplied by UOP Honeywell prior to use. HDMS was fed to the reactor as a 22 wt% solution in ISOPAR-E. The reactor temperature was measured at or near the exit of the reactor. The interpolymer was isolated and pelletized. Polymerization conditions are listed in Table 1C-1E, and catalysts are shown in Table 1B. The polymer properties of each ethylene/octene/silane interpolymer (SiH-POE) and ethylene/octene interpolymer (POE) are shown in Tables 2A and 2B.

The interpolymer P4 (ethylene-SiH polymer) was prepared in a 100 mL polymerization reactor that was hydraulically full, and operated at steady state conditions. The solvent was ISOPAR-E, supplied by the ExxonMobil Chemical Company. Allyldimethylsilane (ADMS) was used as a termonomer and was purified over AZ-300 alumina supplied by UOP Honeywell prior to use. ADMS synthesis is described below. ADMS was fed to the reactor as a 250 g/L solution in ISOPAR-E. The reactor temperature was measured at or near the exit of the reactor. The polymer solution was collected into trays, which were placed in a fume hood, and the solvent was allowed to evaporate overnight. The trays containing the remaining polymer were then transferred to a vacuum oven, and heated to 100°C, under reduced pressure, to remove any residual solvent. After cooling to ambient temperature, the polymers were weighed for yield/efficiencies, transferred to containers for storage, and submitted for analytical testing. Polymerization conditions are listed in Table 1C-1E, and catalysts are shown in Table 1B. The polymer properties of each olefin-SiH polymer are shown in Tables 2A and 2B.

B. ADMS Synthesis

A nitrogen purged and dry 30-gal glass-lined steel reactor was charged with 35 kg dry toluene ((>99%) was obtained from Sigma-Aldrich and dried via an alumina column to <5ppmw water). 20.2 L of 1 M Allylmagnesium bromide in diethyl ether (Sigma-Aldrich) was then added to the reactor and stirred at 25°C and 120 rpm. 2L of dimethylchlorosilane (DOWSIL™ Z-1219) was added to yield 1.8 kg of Allyldimethylsilane (ADMS) in toluene and diethyl ether. The mixture was then transferred to a 20-gal glass-lined steel reactor the volatiles were were distilled overhead at a jacket temperature of 110-140°C and 800Torr. The ADMS mixture was further distilled using a 12L batch still (4ft x 2 inch) packed column to yield ~1.2 kg of ADMS.

Table 1A: Polymerization Conditions to produce P5 Polymer

| Resin | Catalyst | Reactor Size | Reactor Pressure (psig) | Ethylene loaded (g) | Propylene Loaded (g) | Silane monomer loaded (mL) | Solvent loaded (g) | $H_2$ loaded (mmol) | Run Time (min) |
|---|---|---|---|---|---|---|---|---|---|
| P5 | PE CAT4 | 2L | 415 | 2.0 | 300 | 10 | 598 | 17.7 | 2.8 |

Table 1B: Catalysts and co-catalysts

| Catalyst (CAT) | Description |
|---|---|
| PE CAT 1 (W-O2012/027448) | 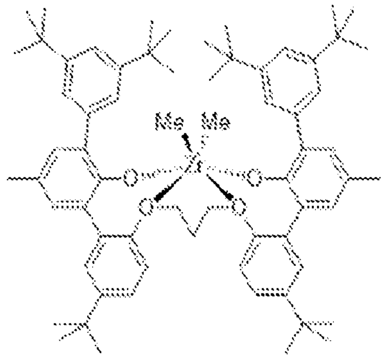 |
| PE CAT 2 (W-O2012/027448) | 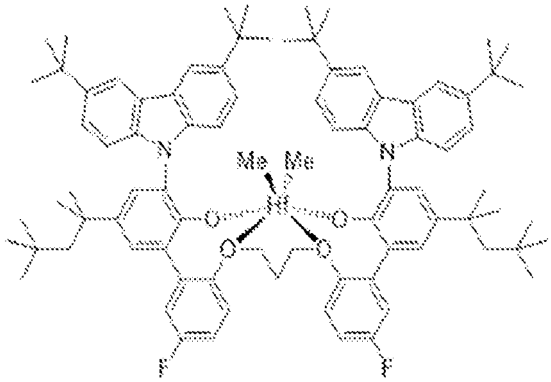 |
| PE CAT 3 (W-O1995/000526) | 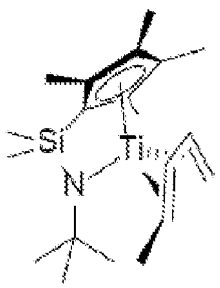 |
| PE CAT 4 (W-O2004/099268) | 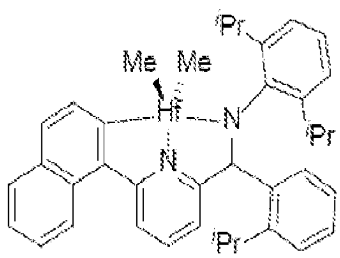 |
| Cocatalyst | |
| CoCAT-1 | A mixture of methyldi(C14-18 alkyl)ammonium salts of tetrakis(pentafluorophenyl)borate, prepared by reaction of a long chain trialkylamine (Armeen™ M2HT, available from Akzo-Nobel, Inc.), HCl and Li[B(C6F5)4], substantially as disclosed in USP 5,919,983, Ex. 2 (no further purification performed) (Boulder Scientific) |
| CoCAT-2 | Modified methylalumoxane (MMAO) Type 3A (no further purification performed) (Akzo Nobel) |

Table 1C: Polymerization Conditions to produce P1-P4 Polymers

| | Reactor Temp., °C | Reactor Pressure, psig | Solvent, lb/hr | Ethylene, lb/hr | Octene, lb/hr | HDMS, lb/h | Hydrogen, sccm | ethylene conversion, % |
|---|---|---|---|---|---|---|---|---|
| P1 | 168 | 726 | 36 | 3.8 | 5.0 | 2.9 | 193 | 82 |
| P2 | 135 | 725 | 14 | 5.0 | 4.9 | 0.4 | 119 | 92 |
| P3 | 170 | 725 | 22 | 4.1 | 5.6 | 1.4 | 90 | 89 |
| P4 | 170 | 600 | 10.6 | 1.4 | 1.6 | 0.4 (ADMS)+ | 5 | 92 |
| *Fed as a 250 g/L solution in IsoparE<br>+- P4 replaces HDMS with ADMS | | | | | | | | |

Table 1D: Catalyst Feed Flows and Efficiency to produce P1-P4 Polymers

| | Catalyst | Catalyst Solution Flow, lb/hr | Catalyst Solution Metal Conc., ppm* | Overall Catalyst Efficiency, (g interpolymer/g total catalyst metal) |
|---|---|---|---|---|
| P1 | PE CAT 2 | 0.57 | 3.96 | 2,385,000 |
| P2 | PE CAT3 | 0.2 | 7.72 | 5,700,000 |
| P3 | PE CAT 1 | 0.48 | 14.68 | 914,000 |
| | Catalyst | Catalyst Solution Flow, mL/min | Catalyst Solution Metal Conc., μM | Overall Catalyst Efficiency, (g interpolymer/g total catalyst metal) |
| P4 | PE CAT2 | 0.84 | 10 | 1,247,000 |
| *The "ppm" amount based on the weight of the respective catalyst feed solution. | | | | |

Table 1E: Cocatalyst Feed Flows to produce P1-P4 Polymers

| | CoCAT 1 Solution Flow, lb/hr | CoCAT 1 Solution Conc., ppm* | CoCAT 2 Solution Flow, lb/hr | CoCAT 2 Solution Conc., ppm Al** |
|---|---|---|---|---|
| P1 | 0.58 | 31.25 | 0.53 | 32.2 |
| P2 | 0.30 | 154.8 | 0.3 | 14.16 |
| P3 | 0 | 0 | 0.25 | 317.9 |
| | CoCAT 1 Solution Flow, mL/min | erdfgtfrCoCAT 1 Solution Conc., μM | CoCAT 2 Solution Flow, mL/min | CoCAT 2 Solution Conc., μM Al*** |
| P4 | 0.84 | 12 | 0.84 | 250 |
| *The "ppm" amount based on the weight of the co-catalyst feed solution. **The "ppm" amount of Al based on the weight of the co-catalyst feed solution. *** the molar concentration is based on that of Al atoms | | | | |

Table 2A: Polymer Properties

| | Resin Description | | | | | Silane Information | | |
|---|---|---|---|---|---|---|---|---|
| Resin | Density (g/cc) | MI (dg/min) | Octene (mol%) | Propylene (mol%) | $T_m$ (C °) | Silane Type | Silane mol%* | Silane wt%** |
| P1 | 0.87 | 0.8 | 11.0 | - | 61.9 | HDMS | 0.9 | 3.4 |
| P2 | 0.872 | - | 11.5 | - | 72.4 | HDMS | 0.6 | 2.3 |
| P3 | 0.868 | 25.8 | 11.9 | - | 73.5 | HMDS | 0.4 | 1.6 |
| P4 | - | - | 11.9 | - | 57.5 | ADMS | 0.8 | 2.1 |

(continued)

| | Resin Description | | | | | Silane Information | | |
|---|---|---|---|---|---|---|---|---|
| Resin | Density (g/cc) | MI (dg/min) | Octene (mol%) | Propylene (mol%) | $T_m$ (C °) | Silane Type | Silane mol%* | Silane wt%** |
| P5 | - | - | - | 84.6 | 61.1 | HDMS | 0.6 | 2.1 |
| *Mol% silane based on total moles of monomers in polymer, and determined by 13C NMR (P1, P2, P3, and P5) and 1H NMR (P4). **Wt% silane calculated from the mol%, and based on the weight of the interpolymer. | | | | | | | | |

Table 2B: Polymer Properties (Conventional GPC)

| Resin | Mn (kg/mol) | Mw (kg/mol) | Mw/Mn |
|---|---|---|---|
| P1 | 45 | 100 | 2.2 |
| P2 | 8.2 | 19 | 2.3 |
| P3 | 24 | 50 | 2.1 |
| P4 | 42 | 99 | 2.4 |
| P5 | 72 | 189 | 2.6 |

C. Process

1. Materials

Materials used in the comparative samples (CS) and in the inventive examples (IE) are provided in Table 3 below.

Table 3

| Name | Structure/properties | Source |
|---|---|---|
| ethylene-SiH terpolymer | ethylene/1-octene/HDMS terpolymer (2.3 wt% HDMS, 33.5 wt% octene) | Dow |
| Monovinyl graft component 1 | 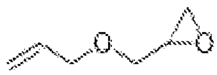 Allyl glycidyl ester | Sigma-Aldrich |
| Monovinyl graft component 2 | 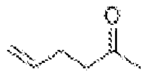 5-hexene-2-one | Sigma-Aldrich |
| Monovinyl graft component 3 | 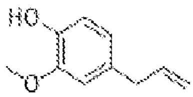 Eugenol | Oakwood Chemical |
| Monovinyl graft component 4 | 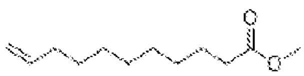 Methyl 10-undecenoate | Sigma-Aldrich |
| Monovinyl graft component 5 | 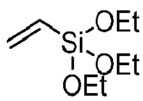 Vinyltriethoxysilane | Sigma-Aldrich |
| Monovinyl graft component 6 | 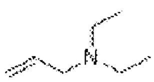 N,N-Diethylallylamine | Oakwood Chemical |

(continued)

| Name | Structure/properties | Source |
|---|---|---|
| Monovinyl graft component 7 | 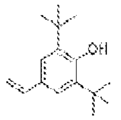 2,6-Di-tert-butyl-4-vinylphenol | Experimental (Non-Commercial) Material, formed according to Org. Lett. 2005, 3721. |
| Monovinyl graft component 8 | 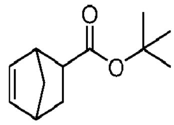 tert-butyl bicyclo[2.2.1]hept-5-ene-2-carboxylate | TCI America |
| CPA/IPA | Speier's catalyst ($[H_3O]_2[PtCl_6][H_2O]_x$) in isopropanol at 2 mg catalyst/mL. | Sigma-Aldrich |
| Rh/Tol | Wilkinson's Catalyst ($Rh[PPh_3]_3Cl$) in toluene at 5 mg/mL toluene. | Sigma-Aldrich |
| Karstedt's | Karstedt's Catalyst ($Pt_2[\{Me_2SiCH{=}CH_2\}_2O]_3$ in xylene at 2 mg/mL | Sigma-Aldrich |

The olefin-SiH polymers are listed in Table 4. Monovinyl graft components 1-8 were obtained from Sigma-Aldrich or Oakwood Chemical and used without further modification. The synthesis of monovinyl graft component 7 is provided in the literature (Org. Lett. 2005, 3721). Monovinyl graft component 8 was obtained from TCI America.

Table 4

| Polymer | Ethylene (mol%) | Propylene (mol%) | 1-Octene (mol%) | Allyldimethylsilane (mol%) | 5-Hexenyldimethylsilane (mol%) | Mn (kDa) | Mw (kDa) |
|---|---|---|---|---|---|---|---|
| P1 | 85.4 | 0 | 13.6 | 0 | 1.0 | 45.3 | 100 |
| P2 | 87.9 | 0 | 11.5 | 0 | 0.6 | 8.2 | 23.9 |
| P3 | 86.1 | 0 | 13.4 | 0 | 0.5 | 23.7 | 50.0 |
| P4 | 60.8 | 0 | 37.1 | 2.1 | 0 | 42.1 | 99.1 |
| P5 | 7.2 | 92.4 | 0 | 0 | 0.5 | 71.9 | 189 |

Inventive Examples 1-5

For inventive examples (IE) 1-5, 30-35 g (shown in Table 5) of olefin-SiH polymer was added to a preheated Haake mixer (Haake mixer equipped with a 50-cc mixing bowl) at the specified temperature (shown in Table 5) with a blend rate of 100 rpm. Mixing continued until the polymer became homogeneous. The monovinyl graft component is added, and mixing was allowed to continue for 1-5 minutes. Then, the catalyst was added (shown in Table 5 below), and the hydrosilylation reaction was allowed to proceed for 10 minutes. At the conclusion of the hydrosilylation reaction, the functionalized polymer is collected. Purification is performed by precipitation from hot toluene into methanol. The resulting material is characterized by proton NMR spectroscopy in 1,1,2,2-tetrachloroethane-$d_2$. Properties of the resultant functionalized polymer are provided in Table 5 below.

Inventive Examples 11-12

For IE11 and IE12, 35-50 g (shown in Table 5) of silane polymer was added to a heated jar with an overhead stirrer in a nitrogen-filled glovebox at the specified temperature (shown in Table 5) with a blend rate of 100 rpm. Mixing continued until the polymer became homogeneous. The monovinyl graft component (5 mol equiv with respect to silane) was added, and mixing was allowed to continue for 1-5 minutes. Then, catalyst was added (shown in Table 5 below), and the hydrosilylation reaction was allowed to proceed for 10 minutes.

Inventive Examples 13-16

For IE13-IE16, the ethylene-SiH polymer was processed in an 11-mm diameter Thermo Fisher Scientific Process 11 Twin Screw Extruder (TSE) kept in a chemical fume hood. This is a compact parallel co-rotating TSE with a clamshell barrel. The extruder length is 44 L/D, including a 40 L/D barrel and a 4 L/D extension. The barrel has 6 multifunctional barrel ports for reagent injection or vacuum, and 8 separate heating zones along the barrel. The polymer was ground to particle sizes below 2 mm before use to facilitate its feeding. The polymer was fed into the extruder using a MovaColor MCBALANCE single screw gravimetric feeder at a rate of 180 g/h. The Speier's catalyst solution in allyl glycidyl ether was injected into the extruder using a 1000D ISCO pump at barrel position #4. To reach the desired loadings of allyl glycidyl ether and catalyst, solutions were formed at concentration between 0.18 and 0.50 mg Speier's catalyst/mL allyl glycidyl ether. A residence time of 2.5 min was used. In general, the extruder was allowed to run for approximately 5 min for equilibration, and then samples of approximately 10-20 g were collected for analysis.

Purification was performed by precipitation of the functionalized polymer from hot toluene into methanol. The resulting purified functionalized polymer is characterized by proton NMR spectroscopy in 1,1,2,2-tetrachloroethane-$d_2$.

Table 5

| Inventive Example | Polymer Mass (g) | Polymer Identity | Catalyst Identity[a] | Monovinyl graft component (wt%)[b] | Monovinyl graft component (equiv) | Catalytic Metal Loading (ppm) | T (°C)[c] | Screw speed (rpm) | Desired Product (%) | Gel Content (wt%) | Mn (kDa) | Mw (kDa) |
|---|---|---|---|---|---|---|---|---|---|---|---|---|
| Batch Runs | | | | | | | | | | | | |
| 1 | 35 | P1 | CPA/AGE | 1 (14%) | 5 | 50 | 100 | 100 | >95 | 2 | 50 | 161 |
| 2 | 35 | P1 | CPA/IPA | 2 (12%) | 5 | 50 | 80 | 100 | >95 | 1 | 49 | 187 |
| 3 | 35 | P1 | CPA/IPA | 3 (20 %) | 5 | 50 | 100 | 100 | >95 | 1 | 51 | 167 |
| 4 | 35 | P1 | CPA/IPA | 4 (24%) | 5 | 50 | 100 | 100 | >95 | 1 | 51 | 218 |
| 5 | 35 | P1 | CPA/IPA | 5 (23%) | 5 | 50 | 100 | 100 | >95 | 1 | 48 | 203 |
| 6 | 35 | P3 | Karstedt's | 1 (14%) | 10.1 | 50 | 100 | 100 | >95 | 1 | 22 | 56 |
| 7 | 35 | P4 | CPA/AGE | 1 (14%) | 5.8 | 50 | 100 | 100 | >95 | 2 | 49 | 157 |
| 8 | 35 | P3 | Karstedt's | 8 (12%) | 5 | 50 | 100 | 100 | >95 | 3 | 30 | 163 |
| 9 | 35 | P3 | Rh/Tol | 3 (10%) | 5 | 50 | 100 | 100 | >95 | 2 | 25 | 75 |
| 10 | 35 | P5 | CPA/AGE | 1 (14%) | 7.85 | 50 | 100 | 100 | >95 | 1 | 51 | 219 |
| 11 | 30 | P2 | CPA/IPA | 6 (9%) | 5 | 50 | 100 | 100 | >95 | 2 | 4.8 | 26.8 |
| 12 | 35 | P2 | CPA/IPA | 7 (19%) | 5 | 50 | 100 | 100 | >95 | 2 | 8.4 | 21.3 |
| Extruder Runs | | | | | | | | | | | | |
| 13 | | P1 | CPA/AGE | 1[b] (14%) | 5 | 25 | 120 | 150 | >95 | 2 | 49 | 157 |
| 14 | | P1 | CPA/AGE | 1[b] (14%) | 5 | 10 | 120 | 150 | >95 | 2 | 48 | 155 |
| 15 | | P1 | CPA/AGE | 1[b] (14%) | 5 | 6 | 120 | 150 | >95 | 2 | 45 | 140 |
| 16 | | P1 | CPA/AGE | 1[b] (9%) | 2.5 | 3 | 120 | 250 | 79 | 2 | 46 | 128 |
| | | | | | | | | | | | | |
| CS1 | 35 | P1 | Karstedt's | 1 (14%) | 5 | 50 | 100 | 100 | ND | 13 | ND | ND |

[a]Catalyst: CPA/IPA: Speier's Catalyst in Isopropanol (2 mg/mL); CPA/AGE: Speier's Catalyst in Allyl Glycidyl Ether (0.18-0.9 mg/mL); Rh/Tol: Wilkinson's Catalyst in Toluene (5 mg/mL); Karstedt's: Karstedt's Catalyst in Xylene (2 mg/mL). [b]Monovinyl graft component, from Table 1. [c]Temperature.

Comparative samples 1-2

For comparative samples (CS) 1-2, 35 g (shown in Table 5) of silane polymer was added to a preheated Haake mixer (Haake mixer equipped with a 50-cc mixing bowl) at 100°C with a blend rate of 100 rpm. Mixing continued until the silane polymer became homogeneous. The monovinyl graft component is added, and mixing was allowed to continue for 1-5 minutes. Then, the catalyst was added (shown in Table 5), and the hydrosilylation reaction was allowed to proceed for 10 minutes. At the conclusion of the hydrosilylation reaction, the functionalized polymer is collected. Purification is performed by precipitation from hot toluene into methanol. The resulting material is characterized by proton NMR spectroscopy in 1,1,2,2-tetrachloroethane-$d_2$. Properties of the resultant functionalized polymer are provided in Table 4 below.

CS1 demonstrates that Karstedt's catalyst, when applied to polymers with high molecular weight (P1 polymer Mw 100 kDa) provides materials with unacceptable levels of gel content (13%) whereas IE6 (P3 polymer Mw 50 kDa) exhibits acceptable gel content (1%).

IE16 demonstrates that a catalyst loading lower limit of 3 ppm Pt can produce functionalized ethylene-Si polymer with 0%, or greater than 0% to 3% gel content (IE 16 -- 2% gel content) and greater than 75% desired product (IE16 79% desired product).

Applicant discovered the ability to produce functionalized ethylene-Si polymer by melt blending ethylene-SiH polymer with the monovinyl graft component of Structure (1) at a temperature form 80°C to 120°C and obtaining a SiH conversion greater than 95% and gel content from 0% to 3% is unexpected (as shown in IE1-16). The use of non-radical chemistry enables the grafting of functional groups that would otherwise react undesirably in the presence of a radical initiator. In particular, antioxidant (hindered phenol) functionality and amine functionality have undesirable reactivity in the presence of a radical initiator. The present process and its use of non-radical grafting is beneficial for installing antioxidant (hindered phenol) functionality and amine functionality such as in structures 8 and 9, for example.

## Claims

1. A process comprising:
melt blending, in the presence of a platinum-group metal catalyst,

   (i) an olefin-SiH polymer with
   (ii) a monovinyl graft component having the Structure (1)

   Structure (1) $H_2C{=}CH_2\text{-}X$

   wherein X of Structure (1) is a $C_4$-$C_{20}$ heterohydrocarbyl group with one or more heteroatoms selected from the group consisting of O, N, and Si; and
   grafting the monovinyl graft component to the olefin-SiH polymer to form a functionalized olefin-Si polymer, wherein the functionalized olefin-Si polymer has a gel content from 0% to less than 3%, as measured in accordance with ASTM D2765-16.

2. The process of claim 1 wherein the olefin-SiH polymer is selected from the group consisting of an ethylene-SiH polymer and a propylene-SiH polymer.

3. The process of any of claims 1-2 wherein the $C_4$-$C_{20}$ heterohydrocarbyl group of Structure (1) includes a moiety selected from the group consisting of epoxide, ether, ester, alcohol, amine, anhydride, ketone, phenol, and combinations thereof.

4. The process of claim any of claims 1-3 wherein the functionalized olefin-SiH polymer has a gel content from 0% to less than 2.5%, as measured in accordance with ASTM D2765-16.

5. The process of any of claims 1-4 comprising melting blending at a temperature from 80°C to 120°C for a duration from one minute to 20 minutes; and
converting greater than 90% SiH to SiC.

6. The process of any of claims 1-5 wherein the process occurs (i) in the absence of a solvent, (ii) in the absence of a

peroxide, and (iii) a combination of (i) and (ii).

**7.** The process of any of claims 1-6 wherein the monovinyl graft component of Structure (1) is selected from the group consisting of allyl glycidyl ester, 5-hexene-2-one, eugenol, methyl 10-undecenoate, vinyltriethoxysilane, 2,6-di-tert-butyl-4-vinylphenol, N,N-diethylallylamine, and 2, 6-tert-butyl bicyclo[2.2.1] hept-5-ene-2-carboxylate.

**8.** The process of any of claims 1-7 wherein the functionalized olefin-Si polymer comprises a -Si-C-C-Y bond wherein

Si is a silicon atom,
C is a carbon atom, and
Y is a $C_4$-$C_{20}$ heterohydrocarbyl group with one or more heteroatoms selected from the group consisting of O, N, and Si.

**9.** The process of claim 8 comprising forming a functionalized olefin-Si polymer having a Structure (2)

Structure (2)

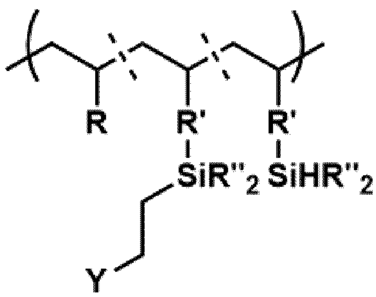

wherein

R is selected from the group consisting of a hexyl group, a methyl group, a hydrogen atom, and combinations thereof,
R' is selected from the group consisting of $-CH_2-$ and $-(CH_2)_4-$,
R" is $CH_3$ and,
Y is a heterohydrocarbonyl group with a moiety selected from the group consisting of epoxide, ether, ester, alcohol, alkyl chain, amine, anhydride, ketone, phenol, and combinations thereof.

**10.** A composition comprising:

a functionalized olefin-Si polymer having a Structure (2)

Structure (2)

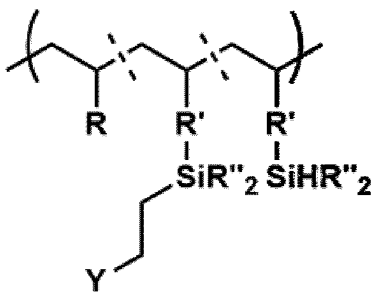

wherein
R is selected from the group consisting of a hexyl group, a methyl group, a hydrogen atom, and combinations thereof,

R' is selected from the group consisting of $-CH_2-$ and $-(CH_2)_4-$,
R" is $CH_3$, and
Y is a heterohydrocarbonyl group with a moiety selected from the group consisting of epoxide, ether, ester, alcohol, alkyl chain, amine, anhydride, ketone, phenol, and combinations thereof, wherein the functionalized olefin-Si polymer has a gel content from 0% to less than 3%, as measured in accordance with ASTM D2765-16.

**11.** The composition of claim 10 wherein the functionalized olefin-Si polymer is a functionalized ethylene-Si polymer.

**12.** The composition of claim 10 wherein the functionalized olefin-Si polymer is a functionalized propylene-Si polymer.

**13.** The composition of any of claims 10-12 wherein Y is a compound selected from the group consisting of s17)-s24) below

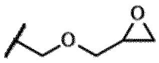
s17),
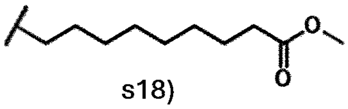
s18)
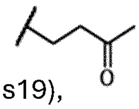
s19),
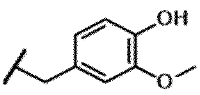
s20)
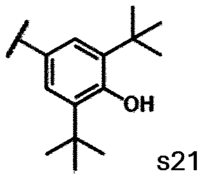
s21),
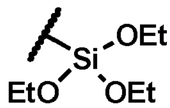
s22),
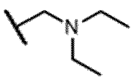
s23), and
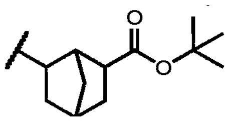
s24).

**Patentansprüche**

**1.** Verfahren, umfassend:

Schmelzmischen, in Gegenwart eines Platinmetallkatalysators,

(i) eines Olefin-SiH-Polymers mit
(ii) einer Monovinyl-Pfropfkomponente, die die Struktur (1) aufweist:

Struktur (1) $H_2C{=}CH_2\text{-}X$

wobei X der Struktur (1) eine $C_4$-$C_{20}$-Heterohydrocarbylgruppe mit einem oder mehreren Heteroatomen ist, die aus der Gruppe ausgewählt sind, bestehend aus O, N und Si; und
Pfropfen der Monovinyl-Pfropfkomponente auf das Olefin-SiH-Polymer, um ein funktionalisiertes Olefin-Si-Polymer zu bilden, wobei das funktionalisierte Olefin-Si-Polymer einen Gelgehalt von 0 % bis weniger als 3 %, gemessen nach ASTM D2765-16, aufweist.

**2.** Verfahren nach Anspruch 1, wobei das Olefin-SiH-Polymer aus der Gruppe ausgewählt ist, bestehend aus einem Ethylen-SiH-Polymer und einem Propylen-SiH-Polymer.

**3.** Verfahren nach einem der Ansprüche 1 bis 2, wobei die $C_4$-$C_{20}$-Heterohydrocarbylgruppe der Struktur (1) einen Teil einschließt, der aus der Gruppe ausgewählt ist, bestehend aus Epoxid, Ether, Ester, Alkohol, Amin, Anhydrid, Keton, Phenol und Kombinationen davon.

**4.** Verfahren nach Anspruch nach einem der Ansprüche 1 bis 3, wobei das funktionalisierte Olefin-SiH-Polymer einen Gelgehalt von 0 % bis weniger als 2,5 %, gemessen nach ASTM D2765-16, aufweist.

5. Verfahren nach einem der Ansprüche 1 bis 4, umfassend:
Schmelzmischen bei einer Temperatur von 80 °C bis 120°C für eine Dauer von einer Minute bis 20 Minuten; und Umwandeln von mehr als 90 % SiH zu SiC.

6. Verfahren nach einem der Ansprüche 1 bis 5, wobei das Verfahren (i) in Abwesenheit eines Lösungsmittels, (ii) in Abwesenheit eines Peroxids und (iii) bei einer Kombination von (i) und (ii) stattfindet.

7. Verfahren nach einem der Ansprüche 1 bis 6, wobei die Monovinyl-Pfropfkomponente der Struktur (1) aus der Gruppe ausgewählt ist, bestehend aus Allylglycidylester, 5-Hexen-2-on, Eugenol, Methyl-10-undecenoat, Vinyltriethoxysilan, 2,6-Di-tert-butyl-4-vinylphenol, N,N-Diethylallylamin und 2,6-tert-Butylbicyclo[2.2.1]hept-5-en-2-carboxylat.

8. Verfahren nach einem der Ansprüche 1 bis 7, wobei das funktionalisierte Olefin-Si-Polymer eine -Si-C-C-Y-Bindung umfasst, wobei

Si ein Siliciumatom ist,
C ein Kohlenstoffatom ist und
Y eine $C_4$-$C_{20}$-Heterohydrocarbylgruppe mit einem oder mehreren Heteroatomen ist, die aus der Gruppe ausgewählt sind, bestehend aus O, N und Si.

9. Verfahren nach Anspruch 8, umfassend das Bilden eines funktionalisierten Olefin-Si-Polymers, das eine Struktur (2) aufweist:

Struktur (2)

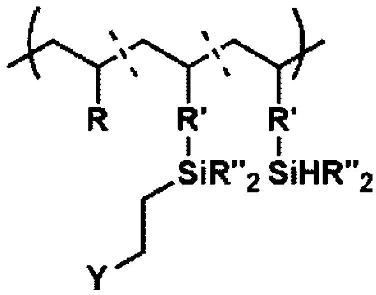

wobei

R aus der Gruppe ausgewählt ist, bestehend aus einer Hexylgruppe, einer Methylgruppe, einem Wasserstoffatom und Kombinationen davon,
R' aus der Gruppe ausgewählt ist, bestehend aus $-CH_2-$ und $-(CH_2)_4-$,
R" $CH_3$ ist und
Y eine Heterohydrocarbonylgruppe mit einem Teil ist, der aus der Gruppe ausgewählt ist, bestehend aus Epoxid, Ether, Ester, Alkohol, Alkylkette, Amin, Anhydrid, Keton, Phenol und Kombinationen davon.

10. Zusammensetzung, umfassend:

ein funktionalisiertes Olefin-Si-Polymer, das eine Struktur (2) aufweist:

Struktur (2)

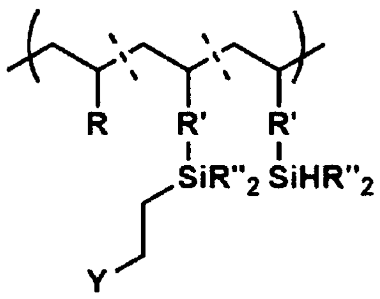

wobei

R aus der Gruppe ausgewählt ist, bestehend aus einer Hexylgruppe, einer Methylgruppe, einem Wasserstoffatom und Kombinationen davon,

R' aus der Gruppe ausgewählt ist, bestehend aus $-CH_2-$ und $-(CH_2)_4-$,

R" $CH_3$ ist und

Y eine Heterohydrocarbonylgruppe mit einem Teil ist, der aus der Gruppe ausgewählt ist, bestehend aus Epoxid, Ether, Ester, Alkohol, Alkylkette, Amin, Anhydrid, Keton, Phenol und Kombinationen davon, wobei das funktionalisierte Olefin-Si-Polymer einen Gelgehalt von 0 % bis weniger als 3 %, gemessen nach ASTM D2765-16, aufweist.

**11.** Zusammensetzung nach Anspruch 10, wobei das funktionalisierte Olefin-Si-Polymer ein funktionalisiertes Ethylen-Si-Polymer ist.

**12.** Zusammensetzung nach Anspruch 10, wobei das funktionalisierte Olefin-Si-Polymer ein funktionalisiertes Propylen-Si-Polymer ist.

**13.** Zusammensetzung nach einem der Ansprüche 10 bis 12, wobei Y eine Verbindung ist, die aus der Gruppe ausgewählt ist, bestehend aus s17) bis s24), wie nachstehend angegeben:

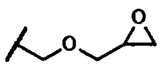
s17),

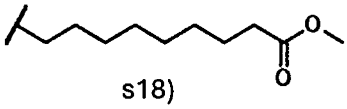
s18)

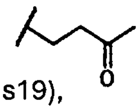
s19),

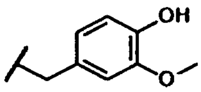
s20)

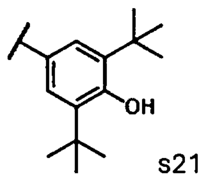
s21),

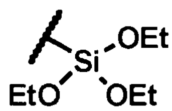
s22),

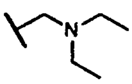
s23), und

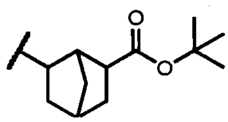
s24).

## Revendications

**1.** Procédé comprenant :

le fait de mélanger à l'état fondu, en présence d'un catalyseur de métal du groupe du platine,

(i) un polymère oléfine-SiH avec
(ii) un composant de greffage monovinylique ayant la Structure (1)

Structure (1) $H_2C=CH_2-X$

dans laquelle X de la Structure (1) est un groupe hétérohydrocarbyle en $C_4$-$C_{20}$ avec un ou plusieurs hétéroatomes choisis dans le groupe constitué de O, N, et Si ; et

le greffage du composant de greffage monovinylique au polymère oléfine-SiH afin de former un polymère oléfine-Si fonctionnalisé, dans lequel le polymère oléfine-Si fonctionnalisé a une teneur en gel allant de 0 % à moins de 3 %, telle que mesurée conformément à la norme ASTM D2765-16.

2. Procédé selon la revendication 1, dans lequel le polymère oléfine-SiH est choisi dans le groupe constitué d'un polymère éthylène-SiH et d'un polymère propylène-SiH.

3. Procédé selon l'une quelconque des revendications 1 à 2, dans lequel le groupe hétérohydrocarbyle en $C_4$-$C_{20}$ de Structure (1) comporte un groupement choisi dans le groupe constitué d'époxyde, éther, ester, alcool, amine, anhydride, cétone, phénol, et combinaisons de ceux-ci.

4. Procédé selon l'une quelconque des revendications 1 à 3, dans lequel le polymère oléfine-SiH fonctionnalisé a une teneur en gel allant de 0 % à moins de 2,5 %, telle que mesurée conformément à la norme ASTM D2765-16.

5. Procédé selon l'une quelconque des revendications 1 à 4, comprenant le mélange à l'état fondu à une température allant de 80 °C à 120 °C pendant une durée allant d'une minute à 20 minutes ; et
la conversion de plus de 90 % de SiH en SiC.

6. Procédé selon l'une quelconque des revendications 1 à 5, dans lequel le procédé se déroule (i) en l'absence de solvant, (ii) en l'absence de peroxyde, et (iii) une combinaison de (i) et (ii).

7. Procédé selon l'une quelconque des revendications 1 à 6, dans lequel le composant de greffage monovinylique de Structure (1) est choisi dans le groupe constitué d'ester allylique et glycidylique, 5-hexén-2-one, eugénol, 10-undécénoate de méthyle, vinyltriéthoxysilane, 2,6-di-tert-butyl-4-vinylphénol, N,N-diéthylallylamine, et 2, 6-tert-butylbicyclo[2.2.1]hept-5-ène-2-carboxylate.

8. Procédé selon l'une quelconque des revendications 1 à 7, dans lequel le polymère oléfine-Si fonctionnalisé comprend une liaison -Si-C-C-Y dans laquelle

Si est un atome de silicium,
C est un atome de carbone, et
Y est un groupe hétérohydrocarbyle en $C_4$-$C_{20}$ avec un ou plusieurs hétéroatomes choisis dans le groupe constitué de O, N, et Si.

9. Procédé selon la revendication 8, comprenant la formation d'un polymère oléfine-Si fonctionnalisé ayant une Structure (2)

Structure (2)

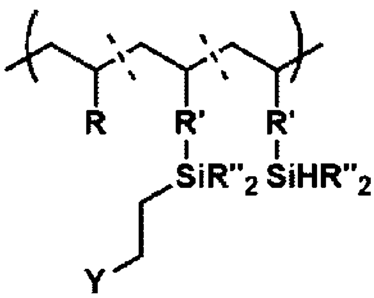

dans laquelle

R est choisi dans le groupe constitué d'un groupe hexyle, d'un groupe méthyle, d'un atome d'hydrogène, et de combinaisons de ceux-ci,
R' est choisi dans le groupe constitué de $-CH_2-$ et $-(CH_2)_4-$,
R" est $CH_3$ et,
Y est un groupe hétérohydrocarbonyle avec un groupement choisi dans le groupe constitué d'époxyde, éther, ester, alcool, chaîne alkyle, amine, anhydride, cétone, phénol, et combinaisons de ceux-ci.

**10.** Composition comprenant :

un polymère oléfine-Si fonctionnalisé ayant une Structure (2)

Structure (2)

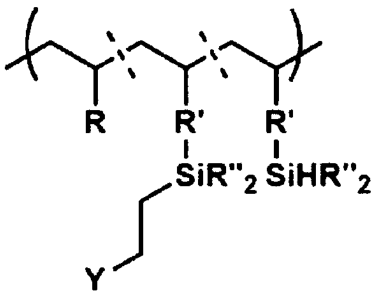

dans laquelle
R est choisi dans le groupe constitué d'un groupe hexyle, d'un groupe méthyle, d'un atome d'hydrogène, et de combinaisons de ceux-ci,
R' est choisi dans le groupe constitué de $-CH_2-$ et $-(CH_2)_4-$,
R" est $CH_3$, et
Y est un groupe hétérohydrocarbonyle avec un groupement choisi dans le groupe constitué d'époxyde, éther, ester, alcool, chaîne alkyle, amine, anhydride, cétone, phénol, et combinaisons de ceux-ci, dans laquelle le polymère oléfine-Si fonctionnalisé a une teneur en gel allant de 0 % à moins de 3 %, telle que mesurée conformément à la norme ASTM D2765-16.

**11.** Composition selon la revendication 10, dans laquelle le polymère oléfine-Si fonctionnalisé est un polymère éthylène-Si fonctionnalisé.

**12.** Composition selon la revendication 10, dans laquelle le polymère oléfine-Si fonctionnalisé est un polymère propylène-Si.

**13.** Composition selon l'une quelconque des revendications 10 à 12, dans laquelle Y est un composé choisi dans le groupe constitué de s17) à s24) ci-après

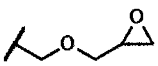
s17),

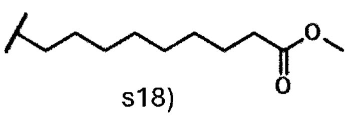
s18)

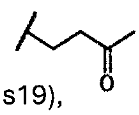
s19),

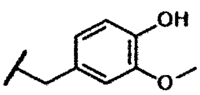
s20)

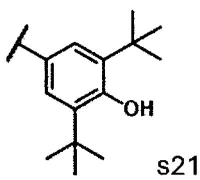
s21),

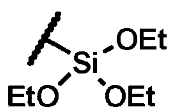
s22),

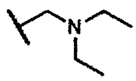 s23), et 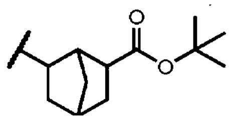 s24).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021262774 A
- WO 2012027448 A
- WO 1995000526 A
- WO 2004099268 A
- US 5919983 A


### Non-patent literature cited in the description


- **WILLIAMS** ; **WARD**. *J. Polym. Sci., Polym. Let.*, 1968, vol. 6, 621
- **WILLIAMS** ; **WARD**. *J. Polym. Sci., Polym. Let*, 1968, vol. 6, 621
- *Org. Lett.*, 2005, 3721